# EUROPÄISCHE PATENTSCHRIFT

(11) **EP 1 572 437 B1**
(45) Veröffentlichungstag und Bekanntmachung des Hinweises auf die Patenterteilung: **26.07.2006**
(21) Anmeldenummer: 03780154.5
(22) Anmeldetag: 18.12.2003
(51) Int. Cl.: B29C 65/20

(54) **HEIZELEMENT-SCHWEISSMASCHINE UND VERFAHREN ZUR SCHNELLUMRÜSTUNG DER WERKZEUGE VON HEIZELEMENT-SCHWEISSMASCHINEN**
HEATING ELEMENT-WELDING MACHINE AND METHOD FOR QUICK REFITTING OF THE TOOLS OF HEATING ELEMENT-WELDING MACHINES
THERMOCOLLEUSE A ELEMENT CHAUFFANT ET PROCEDE POUR CHANGER RAPIDEMENT DES OUTILS SUR DES THERMOCOLLEUSES A ELEMENT CHAUFFANT

(30) Priorität: 20.12.2002 DE 10261239; 21.05.2003 DE 10322858
(43) Veröffentlichungstag der Anmeldung: 14.09.2005
(73) Patentinhaber: KLN ULTRASCHALL GMBH, D-64646 Heppenheim (DE); Faurecia Innenraumsysteme GmbH, 76767 Hagenbach (DE)
(72) Erfinder: THEWS, Heinz, 64646 Heppenheim (DE); WERNZ, Günther, 69221 Dossenheim (DE); HOLZWARTH, Holger, 76829 Landau- Mörlheim (DE)
(74) Vertreter: Helber, Friedrich
(86) Internationale Anmeldenummer: PCT/EP2003/014450
(87) Internationale Veröffentlichungsnummer: WO 2004/058486

(56) Entgegenhaltungen:
- WO-A-98/13193
- NIJZINK H: "AUTOMATISIERUNGSSTUFEN BEIM EINFUEHREN VON WERKZEUGWECHSELSYSTEMEN" KUNSTSTOFFE, CARL HANSER VERLAG. MUNCHEN, DE, Bd. 80, Nr. 5, 1. Mai 1990 (1990-05-01), Seiten 579-582, XP000165071 ISSN: 0023-5563
- "SCHNELLER WERKZEUG-WECHSEL MIT UNIVERSELLEN MULTIKUPPLUNGEN" PLASTVERARBEITER, ZECHNER UND HUETHIG VERLAG GMBH. SPEYER/RHEIN, DE, Bd. 42, Nr. 3, 1. März 1991 (1991-03-01), Seite 134,136, XP000233257 ISSN: 0032-1338

## Beschreibung

Die Erfindung betrifft eine Heizelement-Schweißmaschine mit einem Maschinenrahmen mit einer Arbeitsplattform zur Halterung eines mit einer Formteilaufnahme bestückbaren Unterwerkzeugs, einer oberhalb der Arbeitsplattform vorgesehenen in Linearführungen in senkrechter Richtung verfahrbaren Halterung für ein mit einer Formteilaufnahme bestückbares Oberwerkzeug und einer im Maschinenrahmen in Linearführung horizontal und vertikal verfahrbar angeordneten Halterung für das von einem Basis-Heizspiegel und auf dessen Ober- und Unterseite montierbaren, zu den Formteilaufnahmen in den zugehörigen Werkzeugen komplementären Spiegel-Formaufsätzen gebildetes Heizelement, welches in auseinandergefahrenem Zustand von Ober- und Unterwerkzeug derart horizontal zwischen die geöffneten Werkzeuge einfahrbar ist, dass die Spiegel-Formaufsätze jeweils zu den zugehörigen Formteilaufnahmen im Ober- und Unterwerkzeug in senkrechter Richtung ausgerichtet sind, wobei das Ober- und Unterwerkzeug und das Heizelement in teilgeöffnetem Zustand der Werkzeuge zu einem als Einheit handhaben Werkzeug-Sandwich vereinigbar sind, welcher nach Lösen der Werkzeuge sowie der Halterung des Heizelements von den sie halternden Maschinenteilen als Einheit aus der Maschine herausfahrbar und gegen einen für die Verarbeitung von neuen Formteilen unterschiedlicher Form oder Größe geeignet ausgebildeten Werkzeug-Sandwich austauschbar ist sowie ein Verfahren zur schnellen Umrüstung der Werkzeuge und des Heizelements solcher Schweißmaschinen.

Heizelement-Schweißmaschinen, welche die einfache und schnelle sowie kostengünstige Verbindung von jeweils zwei Formteilen aus thermoplastischem Kunststoff ermöglichen, haben sich in den letzten Jahrzehnten zunehmend durchgesetzt. Um die Rüstzeiten beim Umrüsten der Werkzeuge und des Heizelements bei der Umstellung der Schweißmaschine auf die Bearbeitung von Formteilen abweichender Größe und/oder Abmessungen zu verringern, wurden bereits Maschinen entwickelt, bei denen das Ober- und das Unterwerkzeug sowie der mit den zugehörigen Formaufsätzen versehene Heizspiegel zu einem als Ganzes handhabbaren Werkzeug-Sandwich vereinigt werden kann, welches die Werkzeuge und den Heizspiegel in vorgegebenen Ausrichtung zueinander hält. Nach Lösen der Werkzeuge und des Heizspiegels von den sie halternden Maschinenteilen ist dieser Werkzeug-Sandwich dann als Ganzes auf entsprechenden Führungsbahnen aus der Vorder- bzw. Rückseite der Schweißmaschine herausfahrbar und dort auf gesonderten Sandwich-Aufnahmeeinrichtungen absetzbar, die in der Regel in eine Übergabe- bzw. Übernahmeposition mit der Schweißmaschine bringbar und aus ihr weg fahrbar sind. Durch Zuordnung mehrerer Sandwich-Aufnahmeeinrichtungen, z.B. so genannter "Trolleys" die mit Werkzeug-Sandwichen für unterschiedliche zu verarbeitende Formteilen bestückt sind, ist es möglich, die Umrüstung der Maschine auf die Verarbeitung unterschiedlicher Formteile zu beschleunigen, indem nach dem Absetzen des für die nicht weiter zu verarbeitenden Formteile bestimmten Werkzeug-Sandwichs auf einer Sandwich-Aufnahmeeinrichtung eine mit einem Werkzeug-Sandwich mit Werkzeugen für die als nächstes zu bearbeitenden Formteile besetzte Sandwich-Aufnahmeeinrichtung an die Übergabeposition der Maschine herangefahren und dann auf den Führungsbahnen in die Position in der Schweißmaschine gebracht wird, in welcher das Ober- und Unterwerkzeug ebenso wie der Heizspiegel mit denen sie im Betrieb halternden Maschinenteilen ausgerichtet und montiert werden, worauf die die Werkzeuge und den Heizspiegel zum Sandwich verbindenden Mittel entfernt werden. Die so umgerüstete Schweißmaschine ist dann für die Verschweißung der neuen Formteile bereit.

Es hat sich gezeigt, dass sich die Umrüstzeit für die Werkzeuge und das Heizelement durch die Sandwichtechnik auf einen Zeitraum von etwa 15 min. verringern lassen. Diese Umrüstzeiten machen sich aber in der Maschinenleistung insbesondere dann nachteilig bemerkbar, wenn bei kleineren Serien von zu verschweißenden Formteilen eine häufigere Werkzeug-Umrüstung erforderlich wird.

WO 98/13193 zeigt eine Heizelement-Maschine nach dem Oberbegriff vom Anspruch 1.

Der Erfindung liegt die Aufgabe zugrunde, die Rüstzeiten beim Austausch der Werkzeug-Sandwiches deutlich zu verringern und so die Produktionsleistung auch bei der Verarbeitung häufig wechselnder Formteile zu erhöhen.

Ausgehend von einer Heizelement-Schweißmaschine der eingangs erwähnten Art wird diese Aufgabe erfindungsgemäß dadurch gelöst, dass dass die Werkzeuge und das Heizelement jeweils in der vorgegebenen Sollausrichtung zu den sie halternden Maschinenteilen zentrierende und durch Hilfskraft-Betätigung in und außer Eingriff bringbare Verriegelungseinrichtungen vorgesehen sind, welche eine gleichzeitige An- bzw. Abkopplung der Teile des jeweiligen Werkzeug-Sandwichs an den jeweils zugeordneten Halterungen der zur Befestigung der Bestandteile des Sandwichs bestimmten Maschinenteile ermöglichen, und dass die Werkzeuge und das Heizelement sowie die jeweils zugeordneten Halterungen der zur Befestigung des Sandwichs bestimmten Maschinenteile jeweils mit Kupplungen für Druck- bzw. Unterdruckleitungen für gasförmige oder flüssige Strömungsmedien bzw. elektrische Leitungen zur Stromzufuhr zum Heizelement versehen sind, welche zugleich mit dem An- und Abkoppeln der Teile des Sandwichs an den zugeordneten Halterungen in und außer Kupplungseingriff gebracht werden. Es hat sich gezeigt, dass die für die Werkzeug-Umrüstung solcher Heizelement-Schweißmaschinen erforderlichen Umrüstzeiten durch die hilfskraftbetätigten Verriegelungseinrichtungen deutlich verringert werden können. Bei Heizelement-Schweißmaschinen von im Übrigen gleicher Konfiguration konnte gezeigt werden, dass die Umrüstung der Schweißmaschine auf die Verarbeitung abweichender Formteile von einem Zeitraum von etwa 15 Minuten auf etwa 5 Minuten verringert werden konnte.

Dabei ist die Ausgestaltung bevorzugt so getroffen, dass die Verriegelungseinrichtungen mit an den Werkzeugen und der Halterung des Heizelements vorgesehenen Riegelaufnahmen durch hilfskraftbetätigte, mit den Riegelaufnahmen in und außer Eingriff bringbaren Riegelelementen versehen sind, wobei die Ausgestaltung dabei so getroffen sein kann, dass die Riegelelemente durch druckmittelbetätigte Servo-Aggregate, z.B. pneumatische oder hydraulische Zylinder in und außer Riegeleingriff mit den zugeordneten Riegelaufnahmen in den Werkzeugen bzw. der Halterung des Heizelements stellbar sind.

Alternativ können Riegelelemente auch durch elektrisch oder elektromagnetisch betätigte Servo-Aggregate oder Stellmotoren in und außer Riegeleingriff mit den Riegelaufnahmen der Werkzeuge bzw. des Heizelements stellbar ausgebildet sein.

Auch der Hubschlitten-Antrieb kann - ebenso wie der Hubantrieb für die in senkrechter Richtung verfahrbare Halterung des Basis-Heizspiegels oder des Oberwerkzeugs - mittels druckmittelbetätigter Aggregate, z.B. pneumatische oder hydraulische Kolben-Zylinder-Einheit, oder - alternativ - durch elektromotorische Antriebe, z.B. durch elektromotorisch angetriebene Gewindespindeln, erfolgen.

Zum Schutz des die Schweißmaschine bedienenden Personal empfiehlt es sich, den Maschinenrahmen mit einem umschließenden Gehäuse zu versehen, welches an der zur Beschickung mit zu verschweißenden Formteilen und zur Entnahme der verschweißten Formteile vorgesehenen Vorderseite durch eine wahlweise zu öffnende und zu schließende Schutztür verschließbar ist, wobei eine die Schutztür während des Schweißvorgangs gegen ungewolltes Öffnen sichernde Schließvorrichtung vorgesehen ist.

Dabei ist die Schutztür vorzugsweise als in senkrechte Richtung verschiebliche Hubtür ausgebildet, welche zwischen einer die offene Vorderseite des Gehäuses verschließenden abgesenkte und einer die Gehäuse-Vorderseite freigebende angehobenen Position verschiebbar am Gehäuse gehaltert ist. Durch die gegen ungewolltes Öffnen verriegelte Schutztür ist sichergestellt, dass auch ungelerntes Personal nicht in den Schweißvorgang eingreift und dadurch Ausschuss produzieren oder auch sich selbst gefährden kann.

Die Arbeitsplattform ist zweckmäßig - in an sich bekannter Weise - mit Gleitbahnen versehen, auf denen ein von den sie halternden Maschinenteilen entriegelter Werkzeug-Sandwich horizontal eine Übergabeposition verfahrbar und auf einer in einer an den Maschinenrahmen anschließende und aus dieser Anschlussstellung wegfahrbar vorgesehene Sandwich-Aufnahmeeinrichtung, z.B. auf so genannten "Trolleys", d.h. auf Rädern oder Rollen verfahrbaren Transportwagen mit einer in der Höhe der Arbeitsplattform der Schweißmaschine vorgesehenen bzw. in eine solche Höhe bringbaren Aufnahmeplattform absetzbar ist.

Dabei empfiehlt es sich, mehrere wahlweise an die Übergabeposition für den Werkzeug-Sandwich an den Maschinenrahmen bringbare Sandwich-Aufnahmeeinrichtungen vorzusehen, auf denen somit Werkzeug-Sandwiche für die Verschweißung unterschiedlicher Formteile bevorratbar sind.

Dabei kann es dann von Vorteil sein, wenn der Schweißmaschine wenigstens eine Vorheizstation zugeordnet ist, in welche die mit einem Werkzeug-Sandwich besetzten Sandwich-Aufnahmeeinrichtungen, z.B. Trolleys einfahrbar und an eine geeignete Energiequelle zur Vorheizung der Werkzeug-Sandwiche anschließbar sind.

In einer vorteilhaften Weiterbildung der Erfindung kann an der Übergabeposition der Schweißmaschine für den Werkzeug-Sandwich ein Werkzeugdrehtisch mit einer Drehtischplatte mit wenigstens zwei in Drehrichtung der Drehtischplatte zueinander winkelversetzte Aufnahmen für Werkzeug-Sandwichs angeordnet sein, die wahlweise in die Übergabeposition zu den Gleitbahnen der Arbeitsplattform der Schweißmaschine und in eine zu einer Sandwich-Aufnahmeeinrichtung ausgerichtete Position verdrehbar sind. Dadurch ist es möglich, auf dem Drehtisch einen Werkzeug-Sandwich für im Anschluss an ein vorgegebenes Produktionslos zu verschweißende abweichende Formteile in einer Aufnahmeeinrichtung des Drehtischs bereitzuhalten. Bei der Umrüstung der Schweißmaschine ist dann ein schneller Austausch der Werkzeug-Sandwiche möglich, indem der auszutauschende Werkzeug-Sandwich nach Abkoppeln seiner Bauteile von den zugeordneten Halterungen in der Schweißmaschine auf den Gleitbahnen abgesetzt und in die Übergabeposition geführt und von dort aus die freie Aufnahmeeinrichtung verschoben wird. Der in einer zweiten Aufnahmeeinrichtung bereit mit dem Werkzeug-Sandwich für die Verschweißung der neuen Formteile besetzte Drehtisch wird dann so gedreht, dass der neue Werkzeug-Sandwich in der Übergabeposition steht und von dort auf den Gleitbahnen in die Arbeitsposition geschoben werden kann. Nach Ankoppeln der Bauteile des Werkzeug-Sandwichs an den zugeordneten Halterungen der Schweißmaschine kann dann die Verschweißung der geänderten Formteile nach sehr geringer Umrüstzeit erfolgen.

Der auf der Drehtischplatte des Werkzeug-Drehtischs zuvor abgesetzte Sandwich kann dann entweder bis zur erneuten Verwendung auf dem Drehtisch in Bereitschaft gehalten oder auf eine verfahrbare Sandwich-Aufnahmeeinrichtung, d.h. einen Trolley überführt und gegen einen anderen Werkzeug-Sandwich ausgetauscht werden, welcher dort für die Verschweißung weiterer abgeänderter Formteile bereit steht.

Dabei ist es von Vorteil, wenn der Werkzeug-Drehtisch mit einer gehäuseartigen Sicherheitsumhausung verkleidet ist, welche ungewollten Zugriff zu in den Aufnahmen des Drehtisches befindlichen Werkzeug-Sandwiches und Wärmeabstrahlung von vorgeheizten Werkzeug-Sandwiches verhindert. Die Sicherheitsumhausung dient also wiederum dem Schutz des Bedienungspersonals und zur Energieeinsparung.

Eine alternative Möglichkeit zum Schutz des Bedienungspersonals gegen Verletzung aufgrund von Kontakt mit dem auf erhöhter Temperatur befindlichen Heizspiegel und zur Energieersparnis ist dadurch verwirklichbar, dass das beim Austausch gegen ein neues Sandwich noch auf hoher Temperatur befindliches Heizelement nicht aus dem Maschinenrahmen ausgefahren, sondern innerhalb des Maschinenrahmens selbst in eine die Verfahrbewegungen des Trägerschlittens nicht störende Warteposition gebracht und dort gegebenenfalls auch weiter mit Heizenergie versorgt wird, so dass also beim Umrüsten der Schweißmaschine auf die Verarbeitung abweichender Werkstücke lediglich die zuvor zu einem Sandwich zusammengeführte Werkzeuge, d.h. das Ober- und das Unterwerkzeug, in der beschriebenen Weise aus der Schweißmaschine entnommen und durch neue Werkzeuge ersetzt werden müssen.

Diese alternative Möglichkeit kann durch eine alternative Ausgestaltung der Heizelement-Schweißmaschine verwirklicht werden, welche gekennzeichnet ist durch einen auf der Arbeitsplattform und einen auf der Arbeitsplattform des Maschinenrahmens horizontal verfahrbaren portalartigen Trägerschlitten mit einer Halterung zur lösbaren Aufnahme eines Trägers für ein vom Basis-Heizspiegel und den auf der Ober- und Unterseite vorgesehenen Formaufsätzen gebildeten Heizspiegel, durch wenigstens einen in einer im Maschinenrahmen gegenüber der zum auseinandergefahrenen Ober- und Unterwerkzeug ausgerichteten Arbeitsposition des Heizspiegels im Maschinenrahmen horizontal versetzten Position vorgesehenen Hubeinrichtung für den von der Halterung entkoppelnden Heizspiegel-Träger, mittels derer der Träger im Maschinenrahmen in senkrechter Richtung in eine Warteposition mit Abstand oberhalb des Trägerschlittens anhebbar ist, in welcher der Trägerschlitten unter dem in Warteposition befindlichen Träger hindurch verfahrbar ist, und durch in der Warteposition vorgesehene, in und außer Eingriff bringbare Verriegelungseinrichtungen zwischen dem Träger und dem Maschinenrahmen sowie Kupplungen für Druck- bzw. Unterdruckleitungen für gasförmige oder flüssige Strömungsmedien bzw. elektrische Leitungen zur Stromzufuhr zum Heizelement des Heizspiegels vorgesehen sind, welche zugleich mit dem An- und Abkoppeln des Trägers an bzw. vom Maschinenrahmen in der Wartepo- sition in und außer Kupplungseingriff bringbar sind.

Wenn die so ausgebildete Heizelement-Schweißmaschine für die Verarbeitung von zwei oder mehreren unterschiedlichen Werkstücken in geringerer Menge dienen soll, so dass also ein Wechsel der Werkzeuge und des Heizelements häufiger erforderlich ist, ist eine Weiterbildung zweckmäßig, bei welcher in dem in Verfahrrichtung des Trägerschlittens entsprechend verlängerten Maschinenrahmen zwei oder mehr entsprechende Hubeinrichtungen vorgesehen sind, welche jeweils um ein solches Maß zueinander horizontal versetzt sind, dass in jeder Hubeinrichtung ein auf einem Träger gehaltener Heizspiegel in eine angehobene Warteposition stellbar ist.

Die Hubeinrichtung(en) können dabei mit Vorteil so ausgebildet sein, dass sie relativ zum Trägerschlitten nach außen versetzte senkrechte Führungssäulen mit Führungen für jeweils einen Hubschlitten aufweisen, an welchen der von der Halterung des Hubschlittens gelöste Träger ankoppelbar ist.

Um eine exakte Führung der Hubschlitten ohne Verkantung und Ecken sicherzustellen, empfiehlt es sich dabei, am Hubschlitten ein rechtwinklig zur Verfahrrichtung des Trägerschlittens angeordnete Welle drehbar zu lagern, an deren bis in den Bereich der jeweils zugeordneten äußeren Führungssäulen geführten Enden jeweils ein Zahnritzel angeordnet ist, die mit jeweils einer an der jeweiligen Führungssäule vorgesehenen Zahnstange kämmen.

Dabei empfiehlt es sich dann, am Hubschlitten eine die Welle zumindest in dessen oberer Hub-Endstellung blockierende Abfallsicherung vorzusehen, welche beim Hubvorgang des Hubschlittens außer Funktion geschaltet ist.

Es empfiehlt sich, das Heizelement an seiner beschickungsseitigen Vorderseite und an beiden seitlichen Längsseiten mit einem in der Draufsicht im Wesentlichen U-förmigen, am Träger der Halterung des Heizelements angeordneten Eingriffsschutz zu versehen, welcher zur Vermeidung von Arbeitsunfällen einen versehentliche Zugriff zum Heizelement durch das Bedienungspersonal verhindert.

Die seitlichen Schenkelflächen des Eingriffsschutzes sind dabei zweckmäßig lösbar an der Außenseite des Trägers der Halterung für das Heizelement befestigt.

In vorteilhafter Weiterbildung der Erfindung sind in der die Schenkelflächen verbindenden beschickungsseitigen Stegfläche des Eingriffsschutzes in Höhenrichtung voneinander beabstandet Einschubführungen für jeweils eine über die nach oben bzw. unter die nach unten weisende Heizfläche des Heizelements einschiebbare Abschirmplatte vorgesehen. Diese aus hoch-hitzebeständigem Plattenmaterial bestehenden Abschirmplatten dienen dazu, in eingeschobenem Zustand eine Abstrahlung von Wärmeenergie auf die noch nicht mit Werkstücken beschickten Formteilaufnahmen zu verhindern. In diesen Formteilaufnahmen sind nämlich an Unterdruckleitungen angeschlossene Saugnäpfe zur Halterung der zu verschweißenden Werkstücke vorgesehen, die zwar aus hitzebeständigem Silikonkunststoff hergestellt sind, durch die vom Heizspiegel abgestrahlte Wärmeenergie mit höherem Temperaturniveau aber beschädigt werden könnten.

Der Eingriffsschutz weist in vorteilhafter Weiterbildung der Erfindung einen aus einem ursprünglich ebenflächigen langgestreckten Zuschnitt aus metallischem Blech- oder Plattenmaterial geringer Stärke durch im Wesentlichen rechtwinklige Umkantung der seitlichen Schenkelflächen von der mittigen Stegfläche um jeweils eine rechtwinklig zu den Längsrändern des Zuschnitts verlaufenden Biegekante hergestellten Mantel auf. Um die Wärmeabfuhr aus dem Innern des von dem Eingriffsschutz und den eingeschobenen Abschirmplatten gebildeten Raums zu ermöglichen, ist der Mantel des Eingriffsschutzes zweckmäßig aus einem mit einer Vielzahl von in regelmäßiger oder unregelmäßiger Verteilung im Blech- oder Plattenmaterial eingearbeiteten Durchgangsöffnungen versehenen Zuschnitt hergestellt.

Die Einschubführungen für die Abschirmplatten werden zweckmäßig von horizontalen Schenkelflächen von Metallprofilen gebildet, welche sich von der Stegfläche des Eingriffsschutzes bis zum rückwärtigen Ende der Halterung des Heizelements erstrecken.

Zum Einführen der Abschirmplatten in die Abschirmstellung sind die stegflächenseitigen Enden der die Einschubführung bildenden metallischen Profile durch jeweils eine in der Stegfläche des Eingriffsschutzes vorgesehene schlitzartige Öffnung zugänglich.

Zum schnellen Umrüsten der Werkzeuge und des Heizelements von Heizelement-Schweißmaschinen wird bei dem Ausführungsbeispiel, bei welchem der Werkzeug-Sandwich die beiden Werkzeuge und das Heizelement umfasst, erfindungsgemäß so verfahren, dass die umzurüstenden Werkzeuge und das Heizelement in eine teilgeöffnete, in senkrechter Richtung in ihren Arbeitspostionen ausgerichtete Stellung gebracht und sie in dieser Ausrichtstellung durch sie relativ zueinander stabil fixierenden Mittel zu einem als Einheit handhabbare Werkzeug-Sandwich verbunden werden, dass die Verriegelungseinrichtungen dann entriegelt und der Werkzeug-Sandwich dadurch von den sie halternden Maschinenteilen gelöst wird und an den halternden Maschinenteilen und den Teilen des Werkzeug-Sandwichs vorgesehene Kupplungen für Druck- bzw.Unterdruckleitungen für gasförmige oder flüssige Strömungsmedien sowie elektrische Leitungen zur Stromzufuhr zum Heizelement entkuppelt werden, dass der gelöste Werkzeug-Sandwich hierauf auf der Arbeitsplattform in eine Übergabeposition zu einer dort plazierten und von ihr entfernbaren Sandwich-Aufnahmeeinrichtung verfahren und auf der Sandwich-Aufnahmeeinrichtung abgesetzt wird, welche anschließend zusammen mit dem Werkzeug-Sandwich aus der Übergabeposition entfernt wird, und dass schließlich eine mit einem neuen Werkzeug-Sandwich belegte Sandwich-Aufnahmeeinrichtung in die Übergabeposition gestellt und der neue Werkzeug-Sandwich auf die Arbeitsplattform im Maschinenrahmen verschoben und in die Verriegelungsposition zu den zugeordneten Verriegelungseinrichtungen der Maschine gebracht und verriegelt wird, und an den halternden Maschinenteilen und den Teilen des Werkzeug-Sandwichs vorgesehene Kupplungen für Druck- bzw. Unterdruckleitungen für gasförmige oder flüssige Strömungsmedien sowie elektrische Leitungen zur Stromzufuhr zum Heizelement gekuppelt werden.

Die auf den Sandwich-Aufnahmeeinrichtungen abgesetzten und gegen aus der Maschine auszutauschenden Werkzeug-Sandwiche werden zweckmäßig vor der Umrüstung der Maschine bereits in der jeweils zugeordneten Sandwich-Aufnahmeeinrichtung vorgeheizt, in dem die Heizelemente des Heizspiegels bereits vor dem Umrüstvorgang an eine elektrische Stromquelle angeschlossen werden. Dadurch wird erreicht, dass die Schweißmaschine sogleich nach ihrer Umrüstung wieder arbeitsbereit ist.

Im Falle der Ausgestaltung der Heizelement-Schweißmaschine derart, dass bei der Umrüstung der Maschine des Heizelements innerhalb der Maschine selbst in einer Warteposition verbleibt, wird erfindungsgemäß so verfahren, dass der Schweißmaschine wenigstens eine Vorheizstation zugeordnet ist, in welcher die mit einem Werkzeug-Sandwich besetzten Sandwich-Aufnahmeeinrichtung einfahrbar und an eine geeignete Energiequelle zur Vorheizung des jeweiligen Werkzeug-Sandwiches anschließbar sind.

Dabei kann dann auch so verfahren werden, dass das - in der Schweißmaschine in einer Warteposition befindliche und vorgeheizte - neue Heizelement aus einer zu dem in der Arbeitsposition der Werkzeuge und zu dem ersten Heizelement im Maschinenrahmen versetzten angehobenen Warteposition auf den in diese Warteposition unterhalb des zugeordneten Heizelements verfahrenen Trägerschlittens abgesenkt und mit ihm gekoppelt wird.

Die Erfindung ist in der folgenden Beschreibung eines Ausführungsbeispiels in Verbindung mit der Zeichnung näher erläutert, und zwar zeigt:
- Fig. 1: eine Seitenansicht einer erfindungsgemäßen Heizelement-Schweißmaschine mit abgenommener GehäuseVerkleidung, in welcher die Werkzeuge und das Heizelement in der zur Beschickung mit nachfolgend zu verschweißenden Formteilen bestimmten auseinandergefahrenen Position dargestellt sind;
- Fig. 2: eine der Fig. 1 entsprechende Seitenansicht in einer Position, in welcher das Heizelement in dem Zwischenraum zwischen die geöffneten Werkzeuge eingefahren ist;
- Fig. 3: eine Vorderansicht der Heizelement-Schweißmaschine ohne montierte Werkzeuge und das Heizelement;
- Fig. 4: eine Seitenansicht eines zur Aufnahme eines von dem Ober- und Unterwerkzeug und dem ausgerichtet zwischen diesen angeordneten und in der ausgerichteten Stellung fixierten Heizelement gebildeten, als Einheit handhabbaren Werkzeug-Sandwichs vorgesehenen Trolleys;
- Fig. 5: eine in der der Fig. 2 entsprechenden Position in vergrößertem Maßstab dargestellte Seitenansicht des in den Zwischenraum zwischen den auseinandergefahrenen Werkzeugen gestellten Heizelements unmittelbar vor der Verbindung der Werkzeuge und des Heizelements zu einem einheitlich handhabbaren WerkzeugSandwich;
- Fig. 6: die Schweißmaschine und ein Trolley in der den Fig. 1 und 2 bzw. 4 entsprechenden Ansicht mit einem zusätzlich zwischen der Schweißmaschine und dem Trolley angeordneten Werkzeug-Drehtisch in der Seitenansicht;
- Fig. 7: eine Draufsicht, gesehen in Richtung des Pfeils 7 in Fig. 6; und
- Fig. 8: eine Seitenansicht eines zweiten Ausführungsbeispiels einer erfindungsgemäßen Heizelement-Schweißmaschine mit abgenommener Gehäuse-Verkleidung in der Darstellung gemäß Fig. 1, jedoch ohne montierte Werkzeuge und Heizelement;
- Fig. 9: eine der Blickrichtung der Fig. 3 entsprechende Vorderansicht der Heizelement-Schweißmaschine des in Fig. 8 gezeigten Ausführungsbeispiels, wobei der Trägerschlitten in der linken Hälfte der Zeichnung in der bestimmungsgemäßen Arbeitsposition, in der rechten Zeichnungshälfte dagegen in einer demgegenüber zurückgefahrenen Position dargestellt ist, in welcher der vom Trägerschlitten abkoppelbare Träger zusätzlich in einer Hubeinrichtung in einer oberhalb des Trägerschlittens befindlichen Warteposition dargestellt ist;
- Fig. 10: eine in der Blickrichtung der Fig. 9 entsprechende Teildarstellung der Hubeinrichtung des zweiten Ausführungsbeispiels;
- Fig. 11: eine Draufsicht auf die Hubeinrichtung, gesehen in Richtung des Pfeils 11 in Fig. 10;
- Fig. 12: eine Ansicht der Hubeinrichtung, gesehen in Richtung des Pfeils 12 in Fig. 10;
- Fig. 13: die von der Beschickungsseite der Schweißmaschine gesehene Vorderansicht eines das Heizelement gegen versehentlichen Zugriff durch das Bedienungspersonal sichernden Eingriffsschutzes;
- Fig. 14: eine Draufsicht auf den Eingriffsschutz, gesehen in Richtung des Pfeils 14 in Fig. 13; und
- Fig. 15: eine Ansicht des aus gelochtem Metallblech bestehenden Zuschnitts für den Mantel des Eingriffsschutzes.

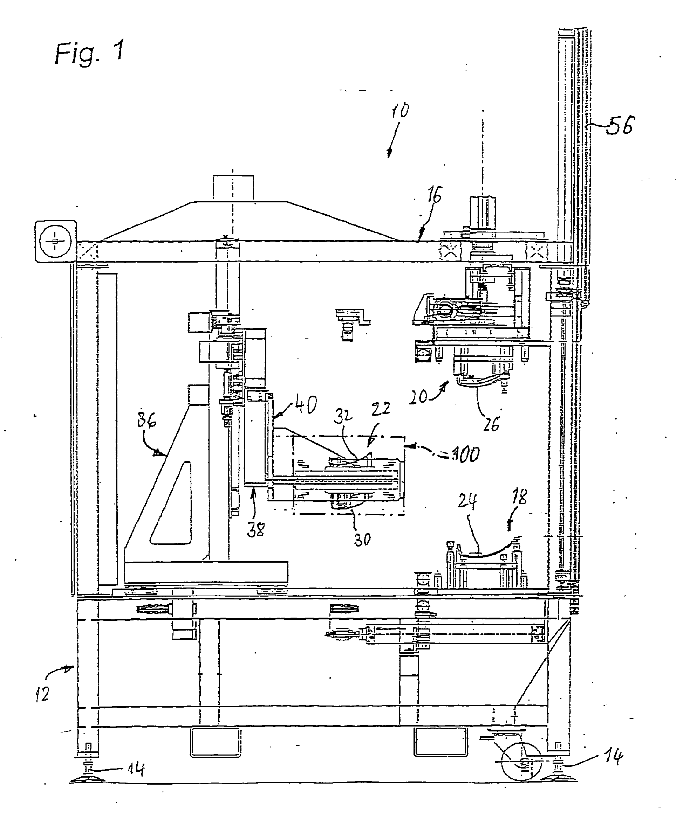

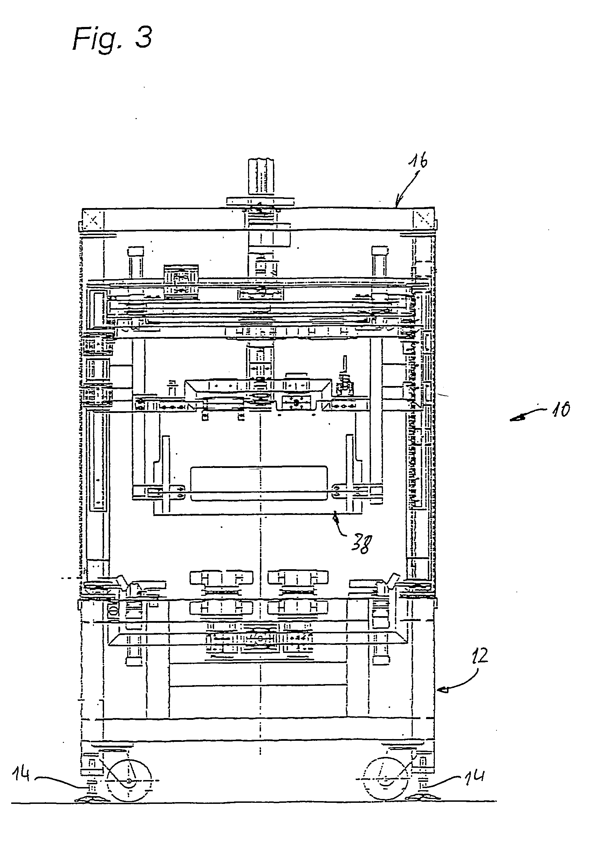

Von der erfindungsgemäßen, in ihrer Gesamtheit mit 10 bezeichneten Heizelement-Schweißmaschine ist in den Fig. 1 bis 3 nur das aus miteinander verschweißten Stahlprofilen hergestellte Grundgestell 12 mit höhenverstellbaren Füßen 14 gezeigt, auf dem ein separater Maschinenrahmen 16 mit einer Arbeitsplattform zur Aufnahme des Unterwerkzeugs 18 und Linearführungen für das Oberwerkzeug 20, Gleitsystemen und Führungsschienen für das Wechseln von Werkzeugen, Linearführungen für die vertikalen und horizontalen Fahrbewegungen des Heizelements 22 etc. dargestellt sind, während äußere Gehäuseteile, Verkleidungen, Schaltschränke zur Aufnahme von Steuerungen und Betätigungselementen weggelassen wurden. Der grundsätzliche Aufbau solcher Heizelement-Schweißmaschinen 10 ist ebenso wie der Aufbau der mit Formteilaufnahmen 24 bzw. 26 bestückbaren Unter- und Oberwerkzeuge sowie des von einem Basis-Heizspiegel 28 mit Spiegel-Formaufsätzen 30, 32 gebildeten Heizelements 22 an sich bekannt und wird deshalb nachstehend nur so weit beschrieben, wie es für das Verständnis der grundsätzlichen Arbeitsweise der Schweißmaschine 10 erforderlich ist.

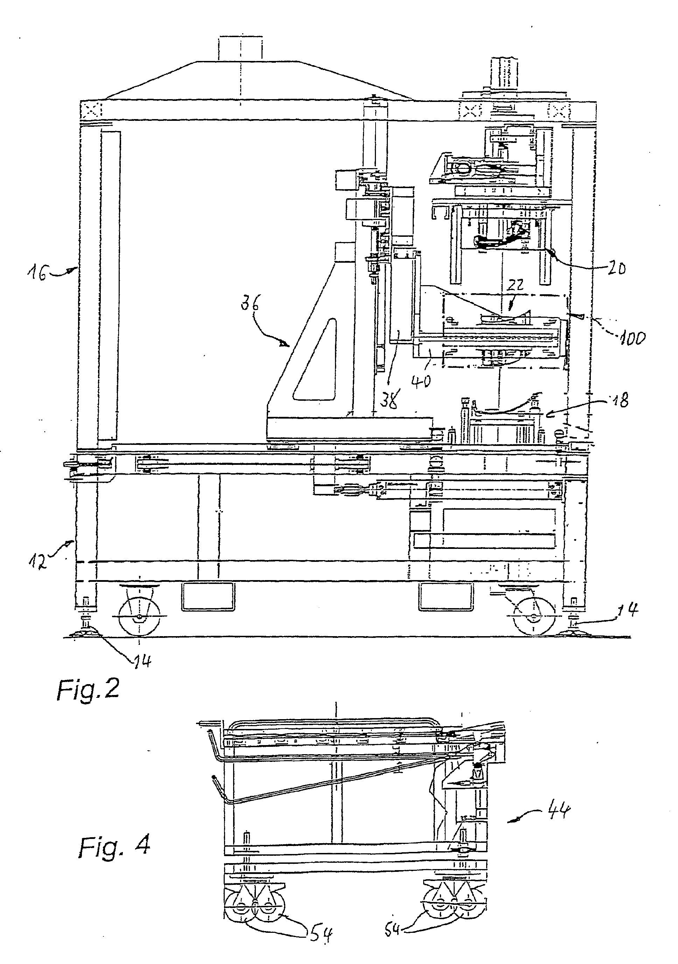

Entlang der seitlichen Ränder der Arbeitsplattform ist jeweils eine Führungsbahn für einen auf der Arbeitsplattform verfahrbaren portalartigen Trägerschlitten 36 vorgesehen, an welchen eine in senkrechter Richtung verfahrbare Halterung 38 für den Träger 40 des Basis-Heizspiegels 28 angehängt ist, welcher zusammen mit den an seiner Unter- und Oberseite vorgesehenen Formaufsätzen 30, 32 das Heizelement 22 bildet. Der Träger 40 ist an der Halterung 38 anhängbar und durch - nicht im Einzelnen gezeigte - hilfskraftbetätigbare Verriegelungseinrichtungen in einer exakt vorgegebenen Position starr an der Halterung 38 verriegelbar, wobei durch die Verriegelungseinrichtungen außerdem an der Halterung 38 bzw. dem Träger 40 vorgesehene Kupplungshälften einer Kupplung für elektrische Leitungen zusammen mit den Verriegelungseinrichtungen in und außer Eingriff bringen, um die das Heizelement auf die vorgeschriebene Temperatur erwärmenden Widerstandselemente des Heizelements mit einer elektrischen Stromquelle zu verbinden bzw. abzukoppeln. Der Trägerschlitten 36 ist aus dem in Fig. 1 gezeigten, zurückgezogenen Position, in welcher das Heizelement 22 aus dem Zwischenraum zwischen dem auf der Arbeitsplattform befestigten Unterwerkzeug 18 und dem zu diesem ausgerichtet in senkrechter Richtung verfarbar am Schienenrahmen angehängten Oberwerkzeug 20 gebildeten Zwischenraum zurückgezogen ist und der in Fig. 2 dargestellten Position verfahrbar, in welcher das Heizelement 22 in die bestimmungsgemäße Ausrichtposition mit dem Unterwerkzeug 18 und dem Oberwerkzeug 20 ausgerichtet ist. In dieser Position sind die im Unter- und Oberwerkzeug vorgesehenen Formteilaufnahmen 24, 26 exakt zu den Spiegel-Formaufsätzen 30, 32 ausgerichtet. Durch Absenken des Heizspiegels 22 auf die Unterform 18 und Absenken des Oberwerkzeugs 20 auf den Heizspiegel 22 können in den Formteilaufnahmen des Unterwerkzeugs 18 und des Oberwerkzeugs 20 eingebracht und dort durch geeignete Vakuumansaugmittel gehaltene Formteile aus thermoplastischem Material gezielt an den zu verschweißenden Stellen erhitzt werden. Sobald die Formteile in den zu verschweißenden Bereichen erweicht sind, werden Ober- und Unterwerkzeug 20, 18 in senkrechter Richtung auseinandergefahren, der Träger 40 des Heizelements 22 etwas angehoben und in die in Fig. 1 gezeigte Stellung zurückgefahren. Durch Absenken des Oberwerkzeugs auf das Unterwerkzeug bis in Anlage der zu verbindenden Formteile werden die Formteile dann in den erwärmten Bereichen in Berührung gebracht und integral miteinander zum fertigen Werkstück verbunden. Das fertige Werkstück kann dann nach Auseinanderfahren von Ober- und Unterwerkzeug und Abschaltung der Vakuumhalterungsmittel aus der Maschine entnommen werden, worauf neue Formteile in die Formteilaufnahmen 24 bzw. 26 von Unter- und Oberwerkzeug eingebracht und zu einem Werkstück verschweißt werden können.

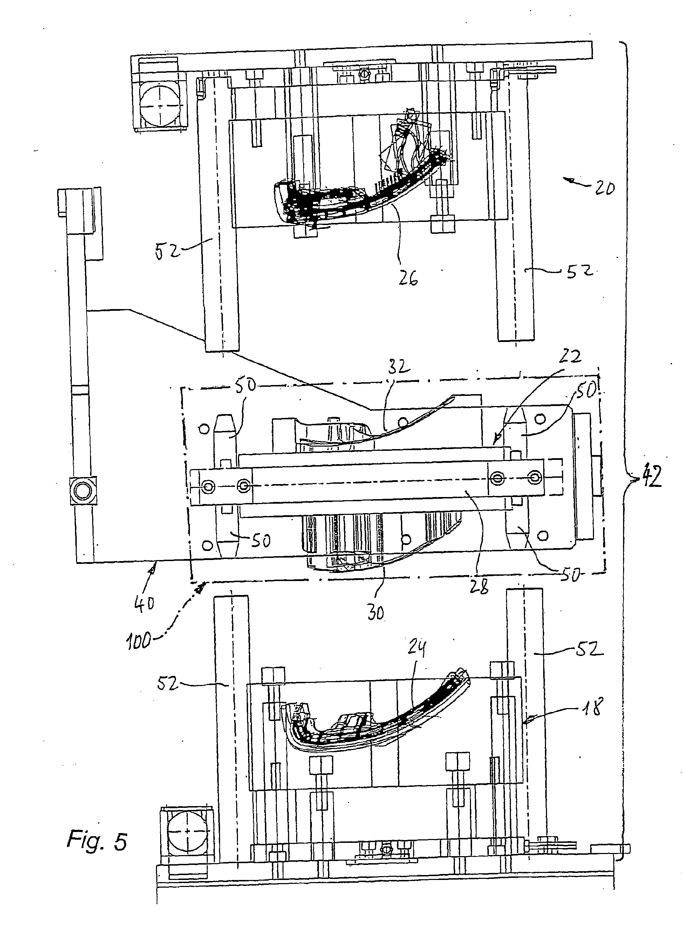

Dabei ist es auch bekannt, dass das auf der Arbeitsplattform befestigbare, mit der zugeordneten Formteilaufnahme 24 bestückte Unterwerkzeug 18, das Heizelement 34 mit dem Träger 40 und das mit der Formteilaufnahme 26 versehene Oberwerkzeug 20 zu einem als Einheit handhabbaren so genannten "Werkzeug-Sandwich" 42 zusammenfassbar sind, welcher in vormontiertem Zustand von einer außerhalb der Schweißmaschine 10 vorgesehene Sandwich-Aufnahme, beispielsweise dem in Fig. 4 gezeigten Trolley 44, in die Schweißmaschine 10 überführt, auf Gleitbahnen der Arbeitsplattform in die Montagestellung der Werkzeuge 18, 20 bzw. des Trägers 40 des Heizelements 22 mit den zugehörigen Halterungen an Funktionsteilen der Schweißmaschine 10 geführt und dann an diesen Halterungen befestigt werden kann, worauf die gegenseitige Fixierung von Unterwerkzeug 18, Heizelement 22 und Oberwerkzeug 20 zum Sandwich 42 aufgehoben wird. Umgekehrt sind die Werkzeuge 18, 20 und das Heizelement 22 mit dem Träger 40 nach Überführung in die zueinander ausgerichtete Lage wieder zu einem Werkzeug-Sandwich 42 zusammenführbar, der als Ganzes aus der Schweißmaschine 10 herausfahrbar und auf einer Sandwich-Aufnahme, z.B. einem Trolley 44, abstellbar ist, worauf ein für Formteile anderer Größe und/oder Formgebung versehener alternativer Werkzeug-Sandwich 42 in die Maschine 10 einbringbar und die Maschine so auf die Verschweißung der abweichenden Formteile umrüstbar ist.

Der normalerweise von einem in der Zeichnung nicht dargestellten Gehäuse umschlossene Maschinenrahmen 16 ist beschickungsseitig durch eine als Hubtür ausgebildete Schutztür 56 verschließbar, welche aus der abgesenkten geschlossenen in eine angehobene geöffnete Position verschiebbar ist. Durch eine - nicht gezeigte - von der Steuerung der Schweißmaschine 10 angesteuerte Schließvorrichtung ist sichergestellt, dass die Hubtür während der Verschweißung von Formteilen vom Bedienungspersonal nicht geöffnet werden kann.

In Fig. 5 sind die zu einem als Einheit handhabbaren Werkzeug-Sandwich 42 zusammenführbaren Teile in einer dort noch nicht zusammengeführten, der Position in Fig. 2 entsprechenden senkrecht auseinandergezogenen Position gezeigt. Es ist erkennbar, dass der Basis-Heizspiegel 28 des Heizelements 22 außerhalb der Spiegel-Formaufsätze 30, 32 mit zum Unterwerkzeug 18 und zum Oberwerkzeug 20 weisenden Steckdornen 50 versehen ist. Ausgerichtet zu den Steckdornen 50 können außerhalb der Formteilaufnahmen 24, 26 lösbar rohrförmige Abstandsäulen 52 auf dem Unterwerkzeug 18 und dem Oberwerkzeug 20 angebracht werden, deren dem Heizelement 22 zugewandte Ende sich beim Absenken des Trägers 40 des Heizelements 22 in Richtung des Unterwerkzeugs 18 und beim Absenken des Oberwerkzeugs 20 in Richtung des Heizelements 22 sich über die Enden der jeweils zu Ihnen ausgerichtete Steckdorne 50 schieben, bis ihre Stirnfläche fest auf den Flachseiten des Basis-Heizspiegels 28 aufsitzen. Unterwerkzeug 18, Heizelement 22 mit dem Träger 40 und Oberwerkzeug 20 sind dann durch ihr Eigengewicht über den Eingriff der Steckdorne 50 ins Innere der Abstandsäulen 52 so miteinander verbunden, dass der erwähnte Werkzeug-Sandwich 42 entsteht, der nach dem Entriegeln der Werkzeuge 18, 20 und des Trägers 40 des Heizelements 22 von den sie in der Schweißmaschine 10 halternden Bauteilen und gleichzeitigem Trennen der Kupplungen der zu den Werkzeugen führende Druck- bzw. Unterdruckleitungen sowie der zum Heizelement führenden elektrischen Leitungen frei verschieblich auf der Arbeitsplattform in der Schweißmaschine steht und auf Gleitbahnen der Arbeitsplattform an das in Fig. 1 und 2 links gelegene rückwärtige Ende der Arbeitsplattform in eine Übergabeposition verschoben und von dort auf den in Fig. 4 dargestellten dort angekoppelten Trolley 44 überführt werden kann. Der Trolley 44 ist in Ausrichtung zu den auf der Arbeitsplattform vorgesehenen Gleitbahnen für den Werkzeug-Sandwich mit Gleitbahnen versehen, so dass die Überführung des Werkzeug-Sandwichs aus der Übergabeposition der Arbeitsplattform auf die Gleitbahnen des Trolleys 44 weitgehend kräftefrei möglich ist.

Nach dem Abkoppeln des Trolleys 44 von der Schweißmaschine 10 kann der Trolley auf an seiner Unterseite vorgesehenen Laufrollen 54 in eine Abstellposition verfahren und ein mit einem alternativen Sandwich 42 besetzten zweiter Trolley 44 in die Übergabeposition an die Schweißmaschine 10 herangefahren werden, worauf der auf die Gleitbahnen der Arbeitsplattform überführte neue Sandwich 44 innerhalb der Schweißmaschine in die Arbeitsposition geführt und unter Umkehrung der Aufeinanderfolge der Entriegelungsschritte wieder mit den zugeordneten Halterungen und Kupplungen der Funktionsteile der Schweißmaschine 10 verriegelt bzw. gekuppelt wird. Die so umgerüstete Schweißmaschine steht dann für die Verschweißung von abgewandelten Formteilen zur Verfügung.

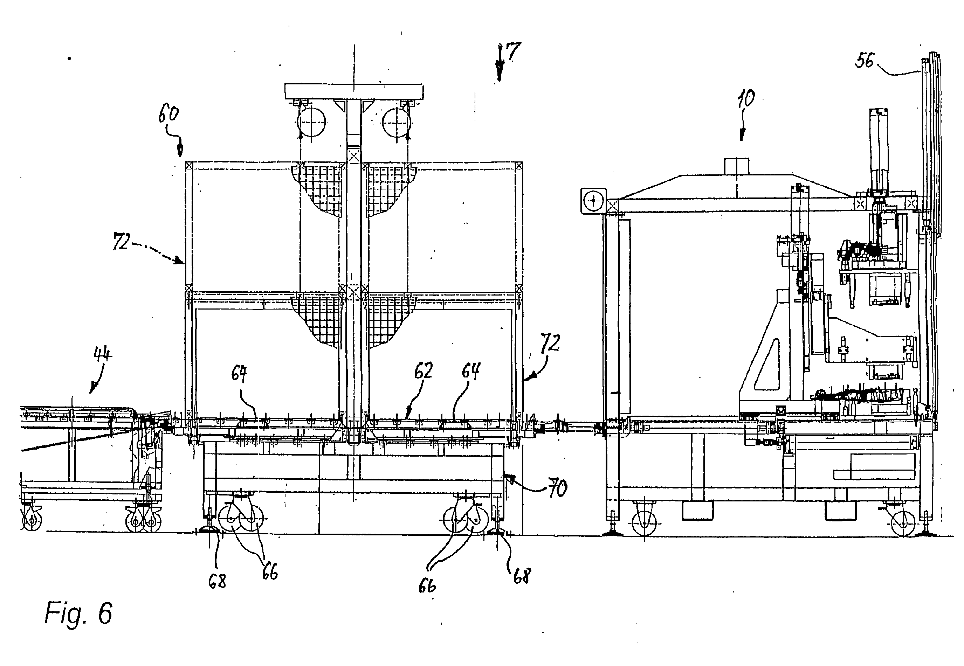

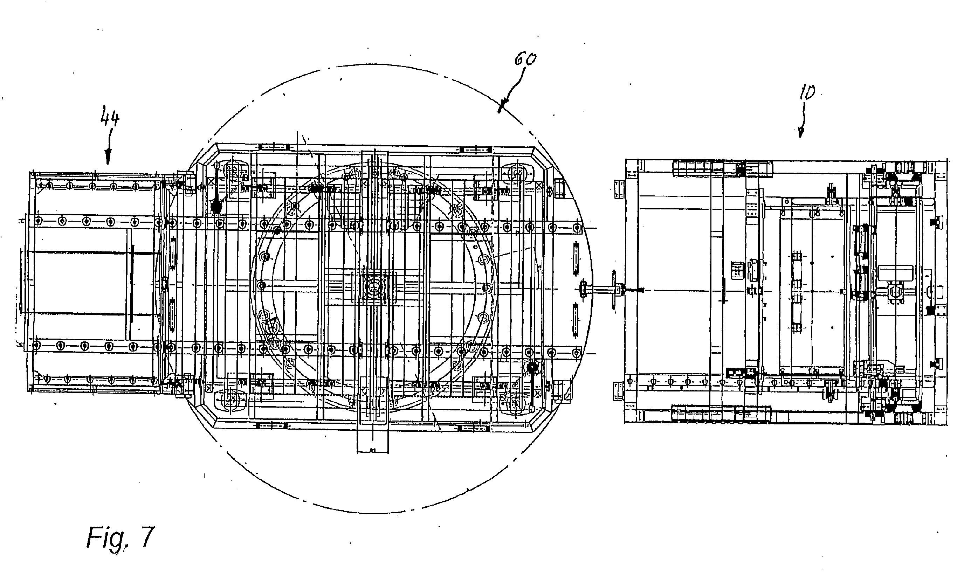

In den Figuren 6 und 7 ist die zusätzliche Anordnung eines die Umrüstung von Werkzeug-Sandwichs der Schweißmaschine 10 weiter vereinfachenden und somit die Umrüstzeit verkürzenden Werkzeug-Drehtischs 60 dargestellt, welcher in der Übergabeposition neben der Schweißmaschine 10 angeordnet ist, und an dessen gegenüberliegender Seite Trolleys 44 in der dargestellten Position ankoppelbar sind, um jeweils einen Werkzeug-Sandwich auf den Werkzeug-Drehtisch 60 zu überführen bzw. von ihm zu übernehmen.

Der Werkzeug-Drehtisch 60 weist eine um eine senkrechte Mittelachse verdrehbare Drehtischplatte 62 auf, auf welcher im speziellen Fall zwei diametral auf gegenüberliegenden Seiten der Drehachse des Drehtischs 60 vorgesehene Aufnahmen 64 für jeweils einen Werkzeug-Sandwich 42 vorgesehen sind.

Die Drehtischplatte 62 ist in einem auf Rollen 66 verfahrbaren und auf höhenverstellbaren Füßen 68 in der vorgeschriebenen Übergabeposition neben der Schweißmaschine 10 auf am Boden fixierbaren Drehtisch-Gestell 70 verdrehbar gelagert, wobei die an ihrer Oberseite mit den Gleitbahnen der Arbeitsplattform der Schweißmaschine 10 entsprechenden Gleitbahnen versehene Drehtischplatte 62 fluchtend zur Arbeitsplattform der Schweißmaschine 10 ausgerichtet ist. In Winkelabständen von 180°, in denen jeweils die Gleitbahnen der Arbeitsplattform der Schweißmaschine 10 und die Gleitbahnen der Drehtischplatte 62 fluchtend zueinander ausgerichtet sind, ist die Drehtischplatte verriegelbar, so dass entweder ein in der Übergabeposition auf der Arbeitsplattform der Schweißmaschine 10 stehender Werkzeug-Sandwich 42 in eine unbelegte Aufnahme 64 des Werkzeug-Drehtischs 60 oder - umgekehrt - ein in der in der Übergabeposition stehenden Aufnahme 64 des Werkzeug-Drehtischs 60 stehender Werkzeug-Sandwich 42 auf die Arbeitsplattform der Schweißmaschine verschoben werden kann.

In gleicher Weise ist die Übergabe eines Werkzeug-Sandwichs 42 von der diametral gegenüberliegenden Aufnahme 64 der Drehtischplatte 62 auf einen angekoppelten Trolley 44 oder umgekehrt von einem Trolley 44 auf die nicht belegte Aufnahme 64 der Drehtischplatte 42 möglich.

Es ist also ersichtlich, dass im Zusammenspiel von Schweißmaschine 10, Werkzeug-Drehtisch 60 und Trolleys 44 Werkzeug-Sandwiches 42 für unterschiedliche Formteile so bereit gehalten werden können, dass die Umrüstung der Schweißmaschine von einem Werkzeug-Sandwich auf einen neuen Werkzeug-Sandwich 42 in kürzester Zeit möglich ist.

Wie bereits erwähnt, ist es dabei von Vorteil, wenn der in der Schweißmaschine neu zu installierende Werkzeug-Sandwich bereits vor seiner Montage in der Schweißmaschine 10 vorgeheizt wird, so dass keine Betriebsverzögerungen durch erforderliche Aufheizzeiten innerhalb der Schweißmaschine 10 auftreten können. Dieses Vorheizen des Werkzeug-Sandwiches kann in einer gesonderten Vorheizstation erfolgen, in denen die bereits auf einem Trolley 44 gehaltene Werkzeug-Sandwiches an eine entsprechende Energiequelle angeschlossen werden. Alternativ ist auch denkbar, dass die Vorheizung auf dem Werkzeug-Drehtisch 60 erfolgt, wozu dann entsprechende Anschlüsse für die Zufuhr von Heizenergie im Werkzeug-Drehtisch 60 vorgesehen sein müssen.

Um Wärmeverluste von vorgeheizten Werkzeug-Sandwiches während der Bereitstellung auf dem Werkzeug-Drehtisch möglichst weitgehend zu verringern und das Bedienungspersonal vor Schädigungen durch einen möglichen Zugriff auf vorgeheizte Werkzeug-Sandwiches zu schützen, ist der Werkzeug-Drehtisch 60 mit einer gehäuseartigen Sicherheitsumhausung 72 versehen, die aus der in Fig. 6 dargestellten Sicherungsposition in die strichpunktiert dargestellte Position anhebbar ist, wenn ein Zugriff zur Drehtischplatte 62 erforderlich ist.

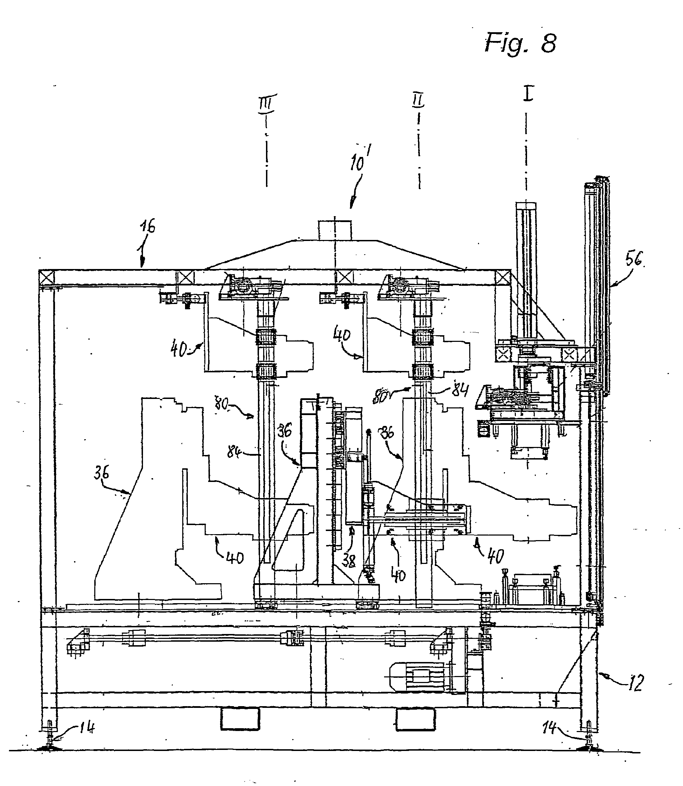

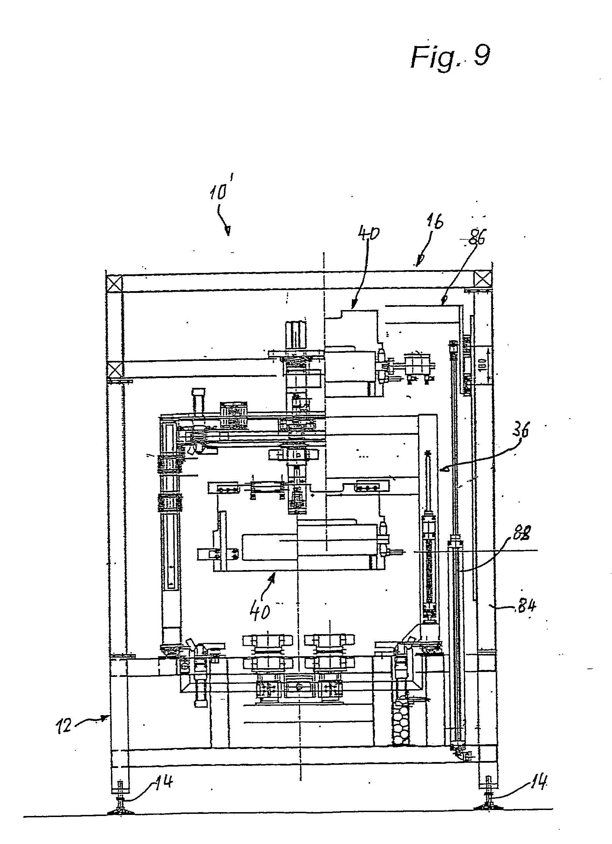

In den Figuren 8 und 9 ist noch ein abgewandeltes-Ausführungsbeispiel einer Heizelement-Schweißmaschine 10' dargestellt, deren grundsätzlicher konstruktiver Aufbau der in den Fig. 1 bis 3 gezeigten Heizelement-Schweißmaschine 10 entspricht.

Nachfolgend werden nur die gegenüber der Heizelement-Schweißmaschine 10 getroffenen und abgewandelten Ausgestaltungen beschrieben, während für den übereinstimmenden Aufbau auf die vorausgehende Beschreibung zu den Figuren 1 bis 3 verwiesen werden kann, zumal funktionell vergleichbare Bauteile der Schweißmaschinen 10 und 10' in den Figuren 1 bis 3 bzw. 8 und 9 die entsprechenden Bezugszeichen zugeordnet sind. Bei der Heizelement-Schweißmaschine 10' ist der Maschinenrahmen 16 sowohl in den horizontalen Tiefenerstreckung als auch in seiner Höhenerstreckung vergrößert, so dass es möglich ist, den Trägerschlitten 36 nicht nur aus der in normaler Strichstärke dargestellten, aus der Arbeitsposition I zurückgezogenen Position II, sondern noch in eine weitere - ebenso wie in der Arbeitsposition - zusätzlich in dünner Strichstärke veranschaulichte Position III zu verfahren.

In den Positionen II und III sind im Maschinenrahmen 16 jeweils Hubeinrichtungen 80 vorgesehen, in denen es möglich ist, den Träger 40 von der Halterung 38 des Trägerschlittens 36 abzukoppeln und in jeweils eine - ebenfalls in dünner Strichstärke dargestellte - angehobene Warteposition zu bringen und dort zu fixieren, wobei die in der Warteposition befindlichen Träger 40 das Hindurchfahren des Trägerschlittens 36 bis in die rückwärtige Übergabeposition nicht behindern. Die Übergabe bzw. Aufnahme von Werkzeug-Sandwiches in der Übergabeposition ist also - wie bei der Schweißmaschine 10 - möglich.

Die Hubeinrichtungen 80 weisen gegenüber den seitlichen Begrenzungen des Trägerschlittens 36 im Montagerahmen 16 nach außen versetzte senkrechte Führungssäulen 84 mit Führungen für jeweils einen in senkrechter Richtung in den Führungen verschieblichen, sich quer über die Arbeitsplattform erstreckenden Hubschlitten 86 auf, an welchem der Träger 40 in abgesenkter Hubstellung des Hubschlittens 86 angekoppelbar und - nach Lösen vom Trägerschlitten 36 - in die Warteposition anhebbar ist. In der angehobenen Warteposition der Träger 40 können deren Kupplungsanschlüsse für die Versorgungsleitungen des Heizspiegels mit entsprechenden mit Versorgungsleitungen verbundenen Kupplungsanschlüssen gekoppelt werden, so dass die in Warteposition befindlichen Heizelemente also - falls erforderlich oder gewünscht - auch weiterhin mit Heizenergie etc. versorgt werden können.

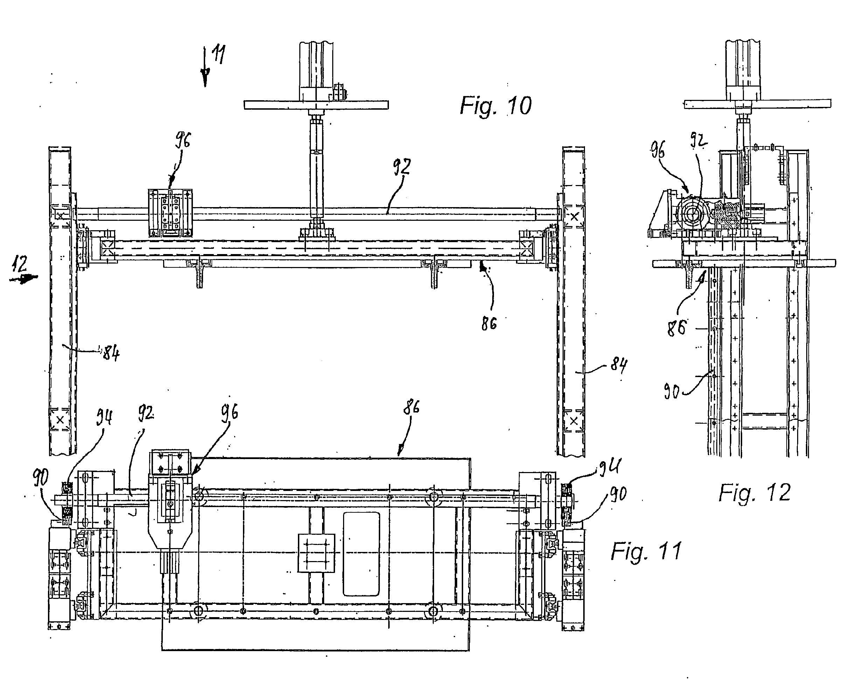

Zum Anheben des Hubschlittens 86 sind im Maschinenrahmen 16 zwischen dem Trägerschlitten 36 und den Führungssäulen 84 druckmittelbeaufschlagbare Kolben-Zylinder-Einheiten 88 vorgesehen. Um beim Anheben des Hubschlittens 86 einen synchronen Gleichlauf ohne Ecken und Verkanten des Hubschlittens 86 sicherzustellen, ist im speziellen Fall eine - in den Fig. 10 bis 12 dargestellte - Synchronisierung dadurch verwirklicht, dass an den äußeren Führungssäulen 84 für den Hubschlitten 86 zusätzliche Zahnstangen 90 vorgesehen sind, mit denen jeweils ein Zahnritzel 94 eines an den Enden einer querverlaufenden und drehbar am Hubschlitten 86 gelagerte Welle 92 angeordneten Zahnritzel-Paars kämmt.

Die Welle 92 ist durch das Gehäuse einer am Hubschlitten 86 angeordneten Abfallsicherung 96 geführt, welche den Hubschlitten durch Blockierung der Welle 92 automatisch gegen Absenken aus der angehobenen Position des Trägers 40 sichert. Beim Absenken bzw. Anheben des Hubschlittens 86 ist die Abfallsicherung 96 dagegen so angesteuert, dass sie die Welle 92 nicht blockiert.

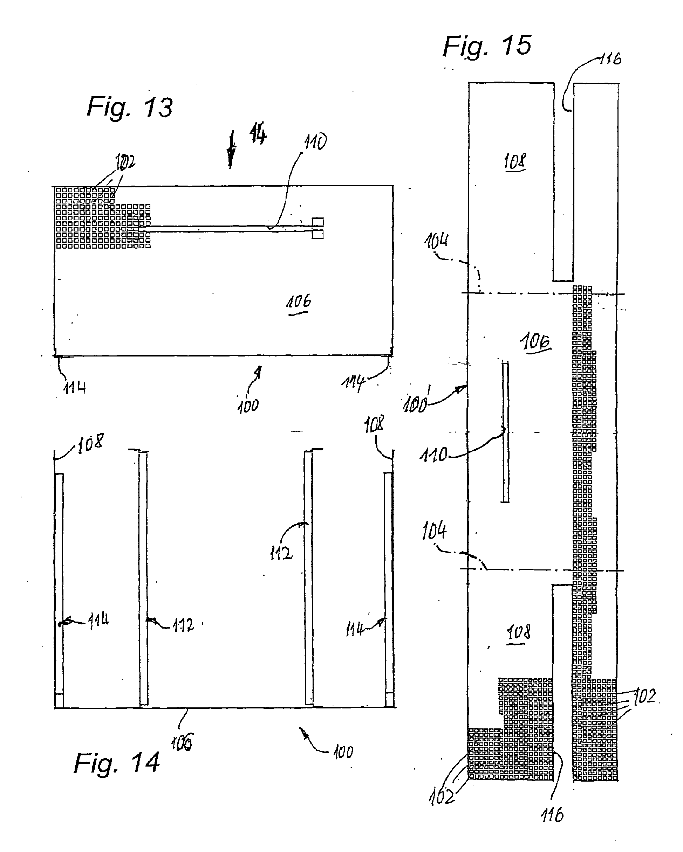

In den Fig. 13 und 14 ist ein den versehentlichen Zugriff auf das beheizte Heizelement 22 durch das Bedienungspersonal verhindernder Eingriffsschutz 100 gezeigt, dessen Anordnung am Träger 40 der Halterung 38 für das Heizelement 22 in den Fig. 1, 2 und 5 schematisch strichpunktiert angedeutet ist.

Der Eingriffsschutz 100 weist eine aus einem ursprünglich ebenflächigen langgestreckten Zuschnitt 100' aus mit einer Vielzahl von Durchgangsöffnungen 102 versehenen Metallblech auf, wobei in den Fig. 13 und 15 solche Durchgangsöffnungen 102 nur in Teilbereichen eingezeichnet sind; sich tatsächlich aber über die gesamte Fläche des Zuschnitts 100' erstrecken. Der Zuschnitt wird durch Umkanten der beiden äußeren Endbereiche entlang der in Fig. 15 strichpunktiert dargestellten Biegelinien 104 zum erwähnten Mantel, der sich also aus einer mittleren Stegfläche 106 und sich an dessen senkrechten Rändern jeweils integral anschließenden rechtwinklig umgekanteten Schenkelflächen 108 zusammensetzt. In der Schenkelfläche 106 ist eine horizontale schlitzförmige Einschuböffnung 110 für eine Abschirmplatte aus wärmebeständigem Material gezeigt, welche zwischen das Heizelement und die zugehörige Formteilaufnahme eingeschoben wird, solange die Formteilaufnahme noch nicht mit einem zu verschweißenden Werkstück beschickt ist. Die Abschirmplatte dient der Abschirmung der Formteilaufnahme gegen die vom Heizelement abgestrahlte Wärmeenergie hoher Temperatur, um sicherzustellen, dass die in den Formteilaufnahmen vorgesehenen Vakuum-Sauger, welche zur Halterung der Werkstücke in der Formteilaufnahme vorgesehen sind, nicht durch die vom Heizelement abgestrahlte Wärme beschädigt oder zerstört werden.

Eine der schlitzartigen Einschuböffnung 110 entsprechende weitere - in Fig. 15 nicht gezeigte - Einschuböffnung kann in der Stegfläche 106 in Höhenrichtung beabstandet von der dargestellten Einschuböffnung 110 vorgesehen sein. Alternativ ist auch eine Ausgestaltung möglich, bei welcher die zweite Abschirmplatte durch im Bereich des unteren Rands der Stegfläche 106 vorgesehene Führungselemente einschiebbar gehaltert werden kann.

Zur Halterung der Abschirmplatte sind im Endbereich der schlitzartigen Öffnungen jeweils Metallprofile 112 vorgesehen, die sich von der Innenseite der Stegfläche 110 bis zur Halterung des Heizelements 22 erstrecken. Diese Profile 112 sind zweckmäßig an der Heizelement-Halterung lösbar befestigt, z.B. angeschraubt.

Weitere Profile 114 sind jeweils entlang der unteren Ränder der Schenkelflächen 108 des Mantels des Eingriffsschutzes 100 vorgesehen, welche den Mantel stabilisieren, aber gleichzeitig auch als Einschubführung für eine untere Abschirmplatte dienen können.

In dem in Fig. 15 dargestellten Zuschnitt 100' des Mantels des Eingriffsschutzes 100 sind in den Schenkelflächen 108 in deren senkrechten Begrenzungen offen mündende schlitzartige Aussparungen 116 dargestellt, die dazu dienen, den fertigen Eingriffsschutz von der beschickungsseitigen Vorderseite über vom Träger 40 des Heizelements 22 seitlich vortretenden Ansätzen aufschieben zu können. Diese nach außen vortretenden Ansätze sind an ihrer Ober- und Unterseite mit den im Zusammenhang mit Fig. 5 beschriebenen Steckdornen 50 versehen, welche zur heizspiegelseitigen Halterung von rohrförmigen Abstandssäulen 52 dienen, mit denen das Unterwerkzeug 18, das Heizelement 22 mit dem Träger 40 und das Oberwerkzeug 20 zu dem als Einheit handhabbaren Werkzeug-Sandwich 42 verbunden werden können.

## Patentansprüche

1. Heizelement-Schweißmaschine (10) mit einem Maschinenrahmen (16) mit einer Arbeitsplattform zur Halterung eines mit einer Formteilaufnahme (24) bestückbaren Unterwerkzeugs (18), einer oberhalb der Arbeitsplattform vorgesehenen in Linearführungen in senkrechter Richtung verfahrbaren Halterung für ein mit einer Formteilaufnahme (26) bestücktes Oberwerkzeug (20) und einer im Maschinenrahmen (16) in Linearführung horizontal und vertikal verfahrbar angeordneten Halterung (38) für das von einem Basis-Heizspiegel (28) und auf dessen Ober- und Unterseite montiertes, zu den Formteilaufnahmen in den zugehörigen Werkzeugen komplementären Spiegel-Formaufsätzen (30; 32) gebildetes Heizelement (22), welches in auseinandergefahrenem Zustand von Ober- und Unterwerkzeug derart horizontal zwischen die geöffneten Werkzeuge (18; 20) einfahrbar ist, dass die Spiegel-Formaufsätze (32; 30) jeweils zu den zugehörigen Formteilaufnahmen (26; 24) im Ober- und Unterwerkzeug in senkrechter Richtung ausgerichtet sind, wobei das Ober- und Unterwerkzeug (20; 18) und das Heizelement (22) in teilgeöffnetem Zustand der Werkzeuge zu einem als Einheit handhabbaren Werkzeug-Sandwich (42) vereinigt sind, welcher nach Lösen der Werkzeuge sowie des Heizelements (22) von den sie halternden Maschinenteilen als Einheit aus der Maschine (10) herausfahrbar und gegen einen für die Verarbeitung von neuen Formteilen unterschiedlicher Form oder Größe geeignet ausgebildeten Werkzeug-Sandwich (42) austauschbar ist,
**dadurch gekennzeichnet,**
**dass** die Werkzeuge (18; 20) und das Heizelement (22) jeweils in der vorgegebenen Sollausrichtung zu den sie halternden Maschinenteilen zentrierende und durch Hilfskraft-Betätigung in und außer Eingriff bringbare Verriegelungseinrichtungen vorgesehen sind, welche eine gleichzeitige An- bzw. Abkopplung der Teile des jeweiligen Werkzeug-Sandwichs (42) an den jeweils zugeordneten Halterungen der zur Befestigung der Bestandteile des Sandwichs (42) bestimmten Maschinenteile ermöglichen, und dass die Werkzeuge (18; 20) und das Heizelement (22) sowie die jeweils zugeordneten Halterungen der zur Befestigung des Sandwichs (42) bestimmten Maschinenteile jeweils mit Kupplungen für Druck- bzw. Unterdruckleitungen für gasförmige oder flüssige Strömungsmedien bzw. elektrische Leitungen zur Stromzufuhr zum Heizelement (22) versehen sind, welche zugleich mit dem An- und Abkoppeln der Teile des Sandwichs (42) an den zugeordneten Halterungen in und außer Kupplungseingriff gebracht werden.

2. Heizelement-Schweißmaschine nach Anspruch 1, **dadurch gekennzeichnet, dass** die Verriegelungseinrichtungen mit an den Werkzeugen (18; 20) und der Halterung des Heizelements (22) vorgesehenen Riegelaufnahmen durch hilfskraftbetätigte, mit den Riegelaufnahmen in und außer Eingriff bringbaren Riegelelementen versehen sind.

3. Heizelement-Schweißmaschine nach Anspruch 2, **dadurch gekennzeichnet, dass** die Riegelelemente durch druckmittelbetätigte Servo-Aggregate wahlweise in und außer Riegeleingriff mit den zugeordneten Riegelaufnahmen in den Werkzeugen bzw. der Halterung des Heizelements stellbar sind.

4. Heizelement-Schweißmaschine nach Anspruch 2, **dadurch gekennzeichnet, dass** die Riegelelemente durch elektrisch betätigte Servo-Aggregate wahlweise in und außer Riegeleingriff mit den Riegelaufnahmen der Werkzeuge bzw. des Heizelements stellbar sind.

5. Heizelement-Schweißmaschine nach einem der Ansprüche 2 bis 4, **dadurch gekennzeichnet, dass** der Maschinenrahmen (16) mit einem umschließenden Gehäuse versehen ist, welches an der zur Beschickung mit zu verschweißenden Formteilen und zur Entnahme der verschweißten Formteile vorgesehenen Vorderseite durch eine wahlweise zu öffnende und zu schließende Schutztür (56) verschließbar ist, und dass die Schutztür während des Schweißvorgangs gegen ungewolltes Öffnen sichernde Schließvorrichtung vorgesehen ist.

6. Heizelement-Schweißmaschine nach Anspruch 5, **dadurch gekennzeichnet, dass** die Schutztür (56) als in senkrechter Richtung verschiebliche Hubtür ausgebildet ist, welche zwischen einer die offene Vorderseite des Gehäuses verschließenden abgesenkten und einer die Gehäuse-Vorderseite freigebenden angehobenen Position verschiebbar am Gehäuse gehaltert ist.

7. Heizelement-Schweißmaschine nach einem der Ansprüche 1 bis 6, **dadurch gekennzeichnet, dass** die Arbeitsplattform mit Gleitbahnen versehen ist, auf denen ein von den sie halternden Maschinenteilen entriegelter Werkzeug-Sandwich (42) horizontal in eine Übergabeposition verfahrbar und auf einer in eine an den Maschinenrahmen (16) anschließende und aus dieser Anschlussstellung wegfahrbar vorgesehenen Sandwich-Aufnahmeeinrichtung (z.B. Trolley 44) absetzbar ist.

8. Heizelement-Schweißmaschine nach Anspruch 7, **dadurch gekennzeichnet, dass** mehrere wahlweise an die Übergabeposition für den Werkzeug-Sandwich (42) an den Maschinenrahmen (16) bringbaren Sandwich-Aufnahmeneinrichtungen vorgesehen sind.

9. Heizelement-Schweißmaschine nach Anspruch 7 oder 8, **dadurch gekennzeichnet, dass** der Schweißmaschine (10) wenigstens eine Vorheizstation zugeordnet ist, in welcher die mit einem Werkzeug-Sandwich besetzten Sandwich-Aufnahmeeinrichtung einfahrbar und an eine geeignete Energiequelle zur Vorheizung des jeweiligen Werkzeug-Sandwiches (42) anschließbar sind.

10. Heizelement-Schweißmaschine nach einem der Ansprüche 7 bis 9, **dadurch gekennzeichnet, dass** an der Übergabeposition der Schweißmaschine (10) für den Werkzeug-Sandwich (42) ein Werkzeug-Drehtisch (60) mit einer Drehtischplatte (62) mit wenigstens zwei in Drehrichtung der Drehtischplatte (62) zueinander winkelversetzten Aufnahmen (64) für Werkzeug-Sandwichs (42) angeordnet ist, die wahlweise in die Übergabeposition zu den Gleitbahnen der Arbeitsplattform der Schweißmaschine (10) und in eine zu einer Sandwich-Aufnahmeeinrichtung (z.B. Trolley 44) ausgerichtete Position verdrehbar sind.

11. Heizelement-Schweißmaschine nach Anspruch 10, **dadurch gekennzeichnet, dass** der Werkzeug-Drehtisch (60) mit einer gehäuseartigen Sicherheitsumhausung (72) verkleidet ist, welche ungewollten Zugriff zu in den Aufnahmen (64) der Drehtischplatte (62) des Drehtischs (60) befindlichen Werkzeug-Sandwiches und Wärmeabstrahlung von vorgeheizten Werkzeug-Sandwiches verhindert. -

12. Heizelement-Schweißmaschine nach einem der Ansprüche 1 bis 6, **gekennzeichnet durch** einen auf der Arbeitsplattform des Maschinenrahmens (16) horizontal verfahrbaren portalartigen Trägerschlitten (36) mit einer Halterung (38) zur lösbaren Aufnahme eines Trägers (40) für ein vom Basis-Heizspiegel (28) und den auf der Ober- und Unterseite vorgesehenen Formaufsätzen (32; 30) gebildeten Heizspiegel (22), **durch** wenigstens einen in einer im Maschinenrahmen (16) gegenüber der zum auseinandergefahrenen Ober- und Unterwerkzeug (20; 18) ausgerichteten Arbeitsposition des Heizspiegels (22) im Maschinenrahmen horizontal versetzten Position vorgesehenen Hubeinrichtung (80) für den von der Halterung entkoppelnden Heizspiegel-Träger (40), mittels derer der Träger (40) im Maschinenrahmen (16) in senkrechter Richtung in eine Warteposition mit Abstand oberhalb des Trägerschlittens (36) anhebbar ist, in welcher der Trägerschlitten unter dem in Warteposition befindlichen Träger hindurch verfahrbar ist, und **durch** in der Warteposition vorgesehene, in und außer Eingriff bringbare Verriegelungseinrichtungen zwischen dem Träger (40) und dem Maschinenrahmen (16) sowie Kupplungen für Druck- bzw. Unterdruckleitungen für gasförmige oder flüssige Strömungsmedien bzw. elektrische Leitungen zur Stromzufuhr zum Heizelement des Heizspiegels (22) vorgesehen sind, welche zugleich mit dem An- und Abkoppeln des Trägers (40) an bzw. vom Maschinenrahmen (16) in der Warteposition in und außer Kupplungseingriff bringbar sind.

13. Heizelement-Schweißmaschine nach Anspruch 12, **dadurch gekennzeichnet, dass** in dem in Verfahrrichtung des Trägerschlittens (36) entsprechend verlängerten Maschinenrahmen (16) zwei oder mehr Hubeinrichtungen (80) vorgesehen sind, welche jeweils um ein solches Maß zueinander horizontal versetzt sind, dass in jeder Hubeinrichtung ein auf einem Träger (40) gehaltener Heizspiegel in eine angehobene Warteposition stellbar ist.

14. Heizelement-Schweißmaschine nach Anspruch 13 oder 14, **dadurch gekennzeichnet, dass** jede Hubeinrichtung (80) relativ zum Trägerschlitten (36) nach außen versetzte senkrechte Führungssäulen (84) mit Führungen für einen Hubschlitten (86) aufweist, an welchen der von der Halterung des Trägerschlittens (36) gelöste Träger (40) ankoppelbar ist.

15. Heizelement-Schweißmaschine nach Anspruch 14, **dadurch gekennzeichnet, dass** am Hubschlitten (86) eine rechtwinklig zur Verfahrrichtung des Trägerschlittens (36) angeordnete Welle (92) drehbar gelagert ist, an deren bis in den Bereich der äußeren Führungssäulen (84) geführten Enden jeweils ein Zahnritzel (94) angeordnet ist, die mit jeweils einer an den Führungssäulen (84) vorgesehenen Zahnstange (90) kämmen.

16. Heizelement-Schweißmaschine nach Anspruch 15, **dadurch gekennzeichnet, dass** am Hubschlitten (86) eine die Welle (92) zumindest in dessen oberer Hub-Endstellung blockierende Abfallsicherung (96) vorgesehen ist.

17. Heizelement-Schweißmaschine nach einem der Ansprüche 1 bis 16, **dadurch gekennzeichnet, dass** das Heizelement (22) an seiner beschickungsseitigen Vorderseite und an beiden seitlichen Längsseiten mit einem in der Draufsicht im Wesentlichen U-förmigen, am Träger (40) der Halterung (38) des Heizelements (22) angeordneten Eingriffsschutz (100) versehen ist, welcher einen versehentlichen Zugriff zum Heizelement (22) durch das Bedienungspersonal verhindert.

18. Heizelement-Schweißmaschine nach Anspruch 17, **dadurch gekennzeichnet, dass** die seitlichen Schenkelflächen des Eingriffsschutzes (100) lösbar an der Außenseite des Trägers (40) der Halterung (38) für das Heizelement (22) befestigt sind.

19. Heizelement-Schweißmaschine nach Anspruch 17 oder 18, **dadurch gekennzeichnet, dass** in der die Schenkelflächen (108) verbindenden beschickungsseitigen Stegfläche (106) des Eingriffsschutzes (100) in Höhenrichtung voneinander beabstandet Einschubführungen für jeweils eine über die nach oben bzw. unter die nach unten weisende Heizfläche des Heizelements (20) einschiebbare Abschirmplatte vorgesehen sind.

20. Heizelement-Schweißmaschine nach einem der Ansprüche 17 bis 19, **dadurch gekennzeichnet, dass** der Eingriffsschutz (100) einen aus einem ursprünglich ebenflächigen langgestreckten Zuschnitt (100') aus metallischem Blech- oder Plattenmaterial geringer Stärke durch im Wesentlichen rechtwinklige Umkantung der seitlichen Schenkelflächen (108) von der mittigen Stegfläche (106) um jeweils eine rechtwinklig zu den Längsrändem des Zuschnitts verlaufende Biegekante hergestellten Mantel aufweist.

21. Heizelement-Schweißmaschine nach Anspruch 20, **dadurch gekennzeichnet, dass** der Mantel des Eingriffsschutzes (100) aus einem mit einer Vielzahl von in regelmäßiger oder unregelmäßiger Verteilung in das Blech- oder Plattenmaterial eingearbeiteten Durchgangsöffnungen (110) versehenen Zuschnitt (100') hergestellt ist.

22. Heizelement-Schweißmaschine nach einem der Ansprüche 19 bis 21, **dadurch gekennzeichnet, dass** die Einschubführungen von horizontalen Schenkelflächen von Metallprofilen (112; 114) gebildet werden, welche sich von der Stegfläche (106) des Mantels des Eingriffsschutzes (100) bis zum rückwärtigen Ende der Halterung des Heizelements (22) erstrecken.

23. Heizelement-Schweißmaschine nach Anspruch 22, **dadurch gekennzeichnet, dass** die stegflächenseitigen Enden der die Einschubführung(en) bildenden metallischen Profile (112; 114) durch jeweils eine in der Stegfläche (106) des Eingriffsschutzes (100) vorgesehene schlitzartige Öffnung (110) für das Einschieben jeweils einer Abschirmplatte zugänglich sind.

24. Verfahren zur schnellen Umrüstung der Werkzeuge und des Heizelements von Heizelement-Schweißmaschinen nach einem der Ansprüche 1 bis 23, **dadurch gekennzeichnet, dass** die umzurüstenden Werkzeuge und das Heizelement in eine teilgeöffnete, in senkrechter Richtung in ihren Arbeitspostionen ausgerichtete Stellung gebracht und sie in dieser Ausrichtstellung durch sie relativ zueinander stabil fixierenden Mittel zu einem als Einheit handhabbare Werkzeug-Sandwich verbunden werden, dass die Verriegelungseinrichtungen dann entriegelt und der Werkzeug-Sandwich **dadurch** von den sie halternden Maschinenteilen gelöst wird, dass der gelöste Werkzeug-Sandwich hierauf auf der Arbeitsplatte in eine Übergabeposition zu einer dort plazierbaren und von ihr entfernbaren Sandwich-Aufnahmeeinrichtung verfahren und auf der Sandwich-Aufnahmeeinrichtung abgesetzt wird, welche anschließend zusammen mit dem Werkzeug-Sandwich aus der Übergabeposition entfernt wird, und dass dann eine mit einem neuen Werkzeug-Sandwich belegte Sandwich-Aufnahmeeinrichtung in die Übergabeposition gestellt und der neue Werkzeug-Sandwich auf die Arbeitsplattform des Maschinenrahmens verschoben und in die Verriegelungsposition zu den zugeordneten Verriegelungseinrichtungen der Maschine gebracht und verriegelt wird, und an den halternden Maschinenteilen und den Teilen des Werkzeug-Sandwichs vorgesehene Kupplungen für Druck- bzw. Unterdruckleitungen für gasförmige oder flüssige Strömungsmedien sowie elektrische Leitungen zur Stromzufuhr zum Heizelement ge- oder entkuppelt werden.

25. Verfahren nach Anspruch 24, **dadurch gekennzeichnet, dass** die auf den Sandwich-Aufnahmeeinrichtung abgesetzten gegen einen aus der Maschine auszutauschenden Werkzeug-Sandwich vor der Umrüstung der Maschine bereits in der zugehörigen Sandwich-Aufnahmeeinrichtung vorgeheizt werden.

26. Verfahren zur schnellen Umrüstung der Werkzeuge und des Heizelements von Heizelement-Schweißmaschinen nach Anspruch 24 oder 25, **dadurch gekennzeichnet, dass** der das Heizelement halternde Trägerschlitten in geöffneter Position der Werkzeuge aus der Arbeitsposition in eine Position innerhalb des Maschinenrahmens verfahren wird, in welcher das Heizelement zu den Werkzeugen horizontal versetzt ist, dass das Heizelement dann nach Lösen der Kupplungen mit den Versorgungsleitungen im Maschinenrahmen in eine Position oberhalb der Verschiebungsbahn des Trägerschlittens angehoben und in dieser Position im Maschinenrahmen fixiert und mit dort vorgesehenen Kupplungen zumindest der Anschlussleitung für Heizenergie gekoppelt wird, dass der Trägerschlitten dann ohne Heizelement in die Arbeitsposition zurückverfahren und dort die zuvor zu einem Sandwich vereinigten und von den sie halternden Maschinenteilen gelösten Werkzeuge aufnimmt und auf der Arbeitsplattform in eine Übergabeposition zu einer dort platzierbaren und von ihr entfernbaren Sandwich-Aufnahmeeinrichtung verfahren und auf der Sandwich-Aufnahmeeinrichtung abgesetzt wird, welche anschließend zusammen mit dem Werkzeug-Sandwich aus der Übergabeposition entfernt wird, und dass dann eine mit einem neuen Werkzeug-Sandwich belegte Sandwich-Aufnahmeeinrichtung in die Übergabeposition gestellt und der neue Werkzeug-Sandwich auf die Arbeitsplattform des Maschinenrahmens verschoben und in der Verriegelungsposition zu den zugeordneten Verriegelungseinrichtungen der Maschine gebracht und verriegelt wird, dass der Trägerschlitten dann in eine Übernahme-Position für ein den Werkzeugen des neuen Werkzeug-Sandwiches zugeordnetes Heizelement auf dem Maschinenrahmen verfahren und dort unter Ankopplung an die Versorgungsleitungen mit dem zugeordneten Heizelement verriegelt wird, worauf das Heizelement in die Arbeitsposition zwischen den geöffneten Werkzeugen zurückverfahren wird.

27. Verfahren nach Anspruch 26, **dadurch gekennzeichnet, dass** das zugeordnete neue Heizelement aus einer zu dem in der Arbeitsposition der Werkzeuge und zu dem ersten Heizelement im Maschinenrahmen versetzten angehobenen Warteposition auf den in diese Warteposition unterhalb des zugeordneten Heizelements verfahrenen Trägerschlitten abgesenkt und mit ihm gekoppelt wird.

## Claims

1. Heating element welding machine (10) with a machine frame (16) with a working platform for folding a lower tool (18) which can be equipped with a receptacle (24) for a moulding, a holder which is provided above the working platform and movable in linear guides in the vertical direction for an upper tool (20) which is equipped with a moulding receptacle, and a holder (38) which is disposed in the machine frame (16) so as to be movable horizontally and vertically in linear guides for the heating element (22) which is formed by a base hot plate (28) and shaped plate attachments (30; 32) which are mounted on the upper and lower faces thereof and are complementary to the receptacles for mouldings in the appertaining tools, wherein in the parted state of the upper and lower tools the heating element can be moved in horizontally between the opened tools in such a way that the shaped plate attachments (32; 30) are in each case oriented in the vertical direction with respect to the appertaining receptacles (26; 24) for mouldings in the upper and lower tools, the upper and lower tools (20; 18) and the heating element (22) being combined in the partially opened state of the tools to form a tool sandwich (42) which can be handled as a unit and which after release of the tools and of the heating element (22) from the machine parts holding them can be moved as a unit out of the machine (10) and replaced by a tool sandwich (42) suitably designed for processing new mouldings of different shape or size, **characterised in that** locking means are provided which centre the tools (18; 20) and the heating element (22) in each case in the predetermined desired orientation with respect to the machine parts holding them and can be brought into and out of engagement by servo actuation and which allow a simultaneous coupling and uncoupling of the parts of the respective tool sandwich (42) relative to the respective associated holders of the machine parts intended for fixing of the components of the sandwich (42), and that the tools (18; 20) and the heating element (22) as well as the respective associated holders of the machine parts intended for fixing of the sandwich (42) are in each case provided with couplings for pressure lines or vacuum lines for gaseous or fluid flow media or electric lines for current supply to the heating element (22) which are brought into and out of coupling engagement simultaneously with the coupling and uncoupling of the parts of the sandwich (42) on the associated holders.

2. Heating element welding machine as claimed in Claim 1, **characterised in that** by means of locking seats on the tools (18; 20) and the holder of the heating element (22) the locking means are provided by servo actuated locking elements which can be brought into and out of engagement with the locking elements.

3. Heating element welding machine as claimed in Claim 2, **characterised in that** the locking elements can be put selectively into and out of engagement with the associated locking seats in the tools or in the holder of the heating element by servo units actuated by pressure medium.

4. Heating element welding machine as claimed in Claim 2, **characterised in that** the locking elements can be put selectively into and out of engagement with the associated locking seats in the tools or in the holder of the heating element by electrically actuated servo units.

5. Heating element welding machine as claimed in any one of Claims 2 to 4, **characterised in that** the machine frame (16) is provided with a surrounding housing which can be closed off by a protective door (56) which can be opened and closed selectively on the front face which is provided for supply with mouldings to be welded and for removal of the welded mouldings, and that a closing device is provided which secures the protective door (56) against unwanted opening.

6. Heating element welding machine as claimed in Claim 5, **characterised in that** the protective door (56) is designed as a lifting door which is movable in the vertical direction and is retained on the housing so as to be movable between a lowered position which closes the open front face of the housing and a raised position which frees the front face of the housing.

7. Heating element welding machine as claimed in any one of Claims 1 to 6, **characterised in that** the working platform is provided with slideways on which tool sandwich (42) unlocked from the machine parts holding it can be moved horizontally into a transfer position and can be set down on a sandwich receiving means (e.g. trolley 44) which can be moved into a position connected to the machine frame (16) and can be moved away out of this connected position.

8. Heating element welding machine as claimed in Claim 7, **characterised in that** a plurality of sandwich receiving means are provided which can be brought selectively to the transfer position for the tool sandwich (42) on the machine frame (16).

9. Heating element welding machine as claimed in Claim 7 or 8, **characterised in that** the welding machine (10) has associated with it at least one preheating station into which the sandwich receiving means containing a tool sandwich can be moved and can be connected to a suitable energy source for preheating of the respective tool sandwich (42).

10. Heating element welding machine as claimed in any one of Claims 7 to 9, **characterised in that** at the transfer position of the welding machine (10) for the tool sandwich (42) there is disposed a tool turntable (60) with a turntable plate (62) with at least two receptacles (64) for tool sandwiches (42) which are offset at an angle to one another in the direction of rotation of the turntable plate and which can be rotated selectively into the transfer position to the slideways of the working platform of the welding machine (10) and into a position aligned with a sandwich receiving means (e.g. trolley 44).

11. Heating element welding machine as claimed in Claim 10, **characterised in that** the tool turntable (60) is covered by a housing-like safety casing (72) which prevents unwanted access to the tool sandwiches located in the receptacles (64) of the turntable plate (62) of the turntable (60) and prevents heat radiation from preheated tool sandwiches.

12. Heating element welding machine as claimed in any one of Claims 1 to 6, **characterised by** a gantry-like supporting carriage (36) which is horizontally movable on the working platform of the machine frame (16) with a holder (38) for releasably receiving a carrier (40) for a hot plate (22) formed by the base hot plate (28) and the receptacles (32; 30) for mouldings provided on the upper and lower face, by at least one hot plate support (40) in a lifting means (80) for decoupling from the holder provided horizontally offset in the machine frame (16) with respect to the working position of the hot plate (22) in the machine frame which is oriented with respect to the parted upper and lower tools (20; 18), wherein by means of the lifting means the carrier (40) can be raised in the vertical direction in the machine frame (16) into a waiting position which is spaced above the supporting carriage (36) and in which the supporting carriage can be moved through below the carrier which is located in the waiting position, and by locking means which are provided in the waiting position and can be brought into and out of engagement between the carrier (40) and the machine frame (16) as well as couplings for pressure lines or vacuum lines for gaseous or fluid flow media or electric lines for current supply to the heating element of the hot plate (22) which can be brought into and out of coupling engagement in the waiting position simultaneously with the coupling and uncoupling of the carrier (40) with the machine frame (16).

13. Heating element welding machine as claimed in Claim 12, **characterised in that** in the machine frame (16) which is appropriately lengthened in the direction of travel of the supporting carriage (36) there are provided two or more lifting means (80) which are in each case offset horizontally with respect to one another by such an amount that in each lifting means a hot plate held on a carrier (40) can be put into a raised waiting position.

14. Heating element welding machine as claimed in Claim 13 or 14, **characterised in that** each lifting means (80) has vertical guide columns (84) offset outwards relative to the supporting carriage (36) with guides for a lifting carriage (86) to which the carrier (40) released from the holder of the supporting carriage (36) can be coupled.

15. Heating element welding machine as claimed in Claim 14, **characterised in that** a shaft (92) which is disposed at right angles to the direction of travel of the supporting carriage (36) is rotatably mounted on the lifting carriage (86), wherein on the ends of the shaft which extend into the region of the outer guide columns (84) there is in each case disposed a pinion (94) which meshes in each case with a toothed rack (90) provided on the guide columns (84).

16. Heating element welding machine as claimed in Claim 15, **characterised in that** a device for securing against falling (96) which locks the shaft (92) at least in the upper travel end position thereof is provided on the lifting carriage (86).

17. Heating element welding machine as claimed in any one of Claims 1 to 16, **characterised in that** the heating element (22) is provided on its supply-side front face and on both lateral long sides with a guard (100) which is substantially U-shaped when viewed from above and is disposed on the carrier (40) of the holder (38) of the heating element (22) and which prevents inadvertent access to the heating element (22) by the operating staff.

18. Heating element welding machine as claimed in Claim 17, **characterised in that** the lateral flank surfaces of the guard (100) are releasably fixed on the outside of the carrier (40) of the holder (38) for the heating element (22).

19. Heating element welding machine as claimed in Claim 17 or 18, **characterised in that** insertion guides which are spaced from one another in the vertical direction for a respective shielding plate which can be inserted above the upwardly directed heating surface or below the downwardly directed heating surface of the heating element (20) are provided in the supply-side web surface (106) of the guard (100) connecting the flank surfaces (108).

20. Heating element welding machine as claimed in any one of Claims 17 to 19, **characterised in that** the guard (100) has a casing produced from an originally flat elongate blank (100') of metal sheet or plate material of low thickness by substantially right-angled bending around of the lateral flank surfaces (108) from the central web surface (106) in each case around a bent edge extending at right angles to the long edges of the blank.

21. Heating element welding machine as claimed in Claim 20, **characterised in that** the casing of the guard (100) is produced from blank (100') provided with a plurality of through holes (110) machined in regular or irregular distribution into the sheet or plate material.

22. Heating element welding machine as claimed in any one of Claims 19 to 21, **characterised in that** the insertion guides are formed by horizontal flank surfaces of metal profiles (112; 114) which extend from the web surface (106) of the casing of the guard (100) as far as the rear end of the holder of the heating element (22).

23. Heating element welding machine as claimed in Claim 22, **characterised in that** the ends on the web surface side of the metal profiles (112; 114) forming the insertion guide(s) are accessible in each case through a slot-like opening (110) provided in the web surface (106) of the guard (100) for the insertion of a shielding plate in each case.

24. Method of quick refitting of the tools and the heating element of heating element welding machines as claimed in any one of Claims 1 to 23, **characterised in that** the tools to the refitted and the heating element are brought into a partially open position aligned in the vertical direction in their working positions and in this aligned position they are connected by means which fix them stably relative to one another to form a tool sandwich which can be handled as a unit, that the locking means are then unlocked and the tool sandwich is thereby released from the machine parts holding it, that the released tool sandwich is thereupon moved on the working plate into a transfer position to a sandwich receiving means which can be placed there and can be removed from it and is set down on the sandwich receiving means which is then removed from the transfer position together with the tool sandwich, and that then a sandwich receiving means containing a new tool sandwich is put into the transfer position and the new tool sandwich is pushed onto the working platform of the machine frame and brought into the locking position relative to the associated locking means of the machine and is locked, and couplings which are provided on the holding machine parts and the parts of the tool sandwich for pressure lines or vacuum lines for gaseous or fluid flow media as well as electric lines for current supply to the heating element are coupled or uncoupled.

25. Method as claimed in Claim 24, **characterised in that** the tool sandwich which is set down on the sandwich receiving means and is to be replaced with one out of the machine is already preheated in the appertaining sandwich receiving means before the refitting of the machine.

26. Method of quick refitting of the tools and the heating element of heating element welding machines as claimed in Claims 24 or 25, **characterised in that** in the open position of the tools the supporting carriage holding the heating element is moved from the working position into a position inside the machine frame in which the heating element is offset horizontally with respect to the tools, that then after release of the couplings the heating element is raised with the supply lines in the machine frame into a position above the displacement path of the supporting carriage and is fixed in this position in the machine frame and at least the connecting line for heating energy is coupled to couplings provided there, that the supporting carriage is then moved back without the heating element into the working position and there the tools which are previously combined into a sandwich and released from the machine parts holding them are picked up and moved on the working plate into a transfer position to a sandwich receiving means which can be placed there and can be removed from it and is set down on the sandwich receiving means which is then removed from the transfer position together with the tool sandwich, and that then a sandwich receiving means containing a new tool sandwich is put into the transfer position and the new tool sandwich is pushed onto the working platform of the machine frame and brought into the locking position relative to the associated locking means of the machine and is locked, that the supporting carriage is then moved on the machine frame into a transfer position for a heating element associated with the tools of the new tool sandwich and is locked there the associated heating element and coupled to the supply lines, whereupon the heating element is moved back into the working position between the open tools.

27. Method as claimed in Claim 26, **characterised in that** from a raised waiting position offset with respect to the working position of the tools and to the first heating element in the machine frame the associated new heating element is lowered onto the supporting carried which is moved into this waiting position below the associated heating element and is coupled thereto.

## Revendications

1. Machine à souder à élément chauffant (10) comprenant un bâti (16) comportant une plate-forme de travail pour le montage d'un outil inférieur (18) pouvant être équipé d'un récepteur de pièce de forme (24), un plateau prévu au-dessus de la plate-forme de travail et mobile verticalement dans des guidages rectilignes pour un outil supérieur (20) équipé d'un récepteur de pièce de forme (26) et un plateau (38) monté mobile horizontalement et verticalement en guidage rectiligne dans le bâti (16) de la machine pour l'élément chauffant (22), qui est formé d'un miroir chauffant de base (28) et d'éléments rapportés de forme de miroir (30, 32) montés sur le côté supérieur et le côté inférieur de celui-ci et complémentaires des récepteurs de pièce de forme placés dans les outils correspondants et peut, lorsque l'outil supérieur et l'outil inférieur sont écartés l'un de l'autre, être amené horizontalement entre les outils (18 ; 20) ouverts de façon telle que les éléments rapportés de forme de miroir (32 ; 30) soient alignés respectivement sur les récepteurs de pièce de forme correspondants (26 ; 24) placés dans l'outil supérieur et l'outil inférieur, l'outil supérieur et l'outil inférieur (20 ; 18) et l'élément chauffant (22) étant, lorsque les outils sont partiellement ouverts, réunis en un sandwich d'outils (42) manipulable d'un seul bloc qui peut, après détachement des outils et de l'élément chauffant (22) des parties de la machine sur lesquelles ils sont montés, être sorti d'un seul bloc de la machine (10) et remplacé par un sandwich d'outils (42) approprié au travail de nouvelles pièces de forme de forme ou de dimension différente,
**caractérisée par le fait**
**qu'**il est prévu des dispositifs de verrouillage qui centrent les outils (18 ; 20) et l'élément chauffant (22) dans l'alignement voulu fixé par rapport aux parties de la machine sur lesquelles ils sont montés, peuvent être mis en prise et hors de prise par actionnement de force auxiliaire et permettent un accouplement ou un désaccouplement simultané des parties du sandwich d'outils (42) aux montures associées des parties de la machine destinées à la fixation des parties du sandwich (42), et que les outils (18 ; 20), l'élément chauffant (22) et les montures associées des parties de la machine destinées à la fixation du sandwich (42) sont pourvus de raccords pour des conduites sous pression ou en dépression pour des gaz ou des liquides et des lignes électriques pour l'alimentation en courant de l'élément chauffant (22), lesquels sont mis en prise de raccordement et hors de prise de raccordement en même temps que l'accouplement et le désaccouplement des parties du sandwich (42) aux montures associées.

2. Machine à souder à élément chauffant selon la revendication 1, **caractérisée par le fait que** les dispositifs de verrouillage sont pourvus de récepteurs de verrouillage prévus sur les outils (18 ; 20) et sur la monture de l'élément chauffant (22) par des éléments de verrouillage actionnés par force auxiliaire qui peuvent être mis en prise et hors de prise avec les récepteurs de verrouillage.

3. Machine à souder à élément chauffant selon la revendication 2, **caractérisée par le fait que** les éléments de verrouillage réglables peuvent être mis au choix en prise de verrouillage et hors de prise de verrouillage avec les récepteurs de verrouillage associés à des outils et de la monture de l'élément chauffant par des organes d'asservissement actionnés par fluide sous pression.

4. Machine à souder à élément chauffant selon la revendication 2, **caractérisée par le fait que** les éléments de verrouillage réglables peuvent être mis au choix en prise de verrouillage et hors de prise de verrouillage avec les récepteurs de verrouillage des outils et de l'élément chauffant par des organes d'asservissement à commande électrique.

5. Machine à souder à élément chauffant selon l'une des revendications 2 à 4, **caractérisée par le fait que** son bâti (16) est pourvu d'une enveloppe l'entourant qui peut être fermée sur le côté avant, prévu pour le chargement de pièces de forme à souder et l'enlèvement des pièces de forme soudées, par une porte de protection (56) s'ouvrant et se fermant, et que cette porte de protection est pourvue d'un dispositif de fermeture qui empêche une ouverture non voulue pendant le soudage.

6. Machine à souder à élément chauffant selon la revendication 5, **caractérisée par le fait que** la porte de protection (56) est une porte levante mobile dans la direction verticale qui est montée mobile sur l'enveloppe entre une position baissée fermant le côté avant ouvert de l'enveloppe et une position levée dégageant le côté avant de l'enveloppe.

7. Machine à souder à élément chauffant selon l'une des revendications 1 à 6, **caractérisée par le fait que** la plate-forme de travail est pourvue de glissières sur lesquelles un sandwich d'outils (42) déverrouillé des parties de la machine sur lesquelles il est monté peut être amené horizontalement dans une position de transfert et déposé sur un dispositif récepteur de sandwich (par exemple chariot 44) attaché au bâti (16) de la machine et pouvant être écarté de sa position attachée.

8. Machine à souder à élément chauffant selon la revendication 7, **caractérisée par le fait qu'**il est prévu plusieurs dispositifs récepteurs de sandwich pouvant être mis au choix en position de transfert du sandwich d'outils (42) sur le bâti (16) de la machine.

9. Machine à souder à élément chauffant selon l'une des revendications 7 et 8, **caractérisée par le fait qu'**il y est associé au moins un poste de préchauffage dans lequel le dispositif récepteur de sandwich garni d'un sandwich d'outils peut être introduit et être connecté à une source appropriée d'énergie pour le préchauffage du sandwich d'outils (42).

10. Machine à souder à élément chauffant selon l'une des revendications 7 à 9, **caractérisée par le fait qu'**à l'endroit de transfert du sandwich d'outils (42) de la machine à souder (10) est placée une table tournante à outils (60) comportant un plateau (62) présentant au moins deux récepteurs (64) de sandwiches d'outils (42) décalés angulairement l'un de l'autre dans la direction de rotation du plateau (62) qui peuvent être amenés au choix, par rotation, en position de transfert aux glissières de la plate-forme de travail de la machine à souder (10) et dans une position alignée sur un dispositif récepteur de sandwich (par exemple chariot 44).

11. Machine à souder à élément chauffant selon la revendication 10, **caractérisée par le fait que** la table tournante à outils (60) est revêtue d'une enveloppe de sécurité du genre boîte (72) qui empêche un accès non voulu aux sandwichs d'outils se trouvant dans les récepteurs (64) du plateau (62) de la table tournante (60) et l'émission de chaleur par rayonnement des sandwichs d'outils préchauffés.

12. Machine à souder à élément chauffant selon l'une des revendications 1 à 6, **caractérisée par** un chariot support du genre portique (36) mobile horizontalement sur la plate-forme de travail du bâti (16) de la machine et comportant une monture (38) destinée à recevoir de manière détachable un support (40) pour un miroir chauffant (22) formé du miroir chauffant de base (28) et des éléments rapportés de forme (32 ; 30) prévus sur le côté supérieur et le côté inférieur, par au moins un dispositif élévateur (80) pour le support de miroir chauffant (40) se désaccouplant de la monture, prévu dans une position décalée horizontalement dans le bâti de la machine de la position de travail du miroir chauffant (22) alignée sur l'outil supérieur et l'outil inférieur (20 ; 18) écartés et au moyen duquel le support (40) peut être monté dans la direction verticale dans le bâti (16) de la machine dans une position d'attente une certaine distance au-dessus du chariot support (36) dans laquelle ce dernier peut traverser sous le support en position d'attente, et par des dispositifs de verrouillage entre le support (40) et le bâti (16) de la machine prévus dans la position d'attente et pouvant être mis en prise et hors de prise, ainsi que des raccords pour des conduites sous pression et en dépression pour des gaz ou des liquides et des lignes électriques d'alimentation en courant de l'élément chauffant du miroir chauffant (22), qui peuvent être mis en prise de raccordement et hors de prise de raccordement en même temps que l'accouplement du support (40) au bâti (16) de la machine et le désaccouplement de ce support de ce bâti en position d'attente.

13. Machine à souder à élément chauffant selon la revendication 12, **caractérisée par le fait que** dans le bâti (16) de la machine, rallongé en conséquence dans la direction de déplacement du chariot support (36), sont prévus deux ou plus de deux dispositifs élévateurs (80) qui sont décalés horizontalement l'un de l'autre ou les uns des autres d'une quantité telle que dans chaque dispositif élévateur, un miroir chauffant monté sur un support (40) puisse être mis dans une position levée d'attente.

14. Machine à souder à élément chauffant selon l'une des revendications 13 et 14, **caractérisée par le fait que** chaque dispositif élévateur (80) présente des colonnes de guidage verticales (84) déportées vers l'extérieur qui comportent des guidages pour un chariot élévateur (86) auquel peut être accouplé le support (40) détaché de la monture du chariot support (36).

15. Machine à souder à élément chauffant selon la revendication 14, **caractérisée par le fait que** sur le chariot élévateur (86) est monté tournant un arbre (92) placé perpendiculairement à la direction de déplacement du chariot support (36) et à chacune des extrémités allant jusque dans le zone des colonnes de guidage extérieures (84) duquel est placé un pignon (94) qui engrène avec une crémaillère (90) prévue sur chacune des colonnes de guidage (84).

16. Machine à souder à élément chauffant selon la revendication 15, **caractérisée par le fait que** sur le chariot élévateur (86) est prévu un moyen anti-chute (96) qui bloque l'arbre (92) au moins dans sa position extrême supérieure.

17. Machine à souder à élément chauffant selon l'une des revendications 1 à 16, **caractérisée par le fait que** l'élément chauffant (22) est pourvu sur son côté avant du côté chargement et sur ses deux côtés longitudinaux latéraux d'une protection anti-intervention (100) sensiblement en forme de U vue de dessus placée sur le support (40) de la monture (38) de l'élément chauffant (22) qui empêche le personnel opérateur de mettre la main par mégarde sur l'élément chauffant (22).

18. Machine à souder à élément chauffant selon la revendication 17, **caractérisée par le fait que** les surfaces latérales d'ailes de la protection anti-intervention (100) sont fixées de manière détachable au côté extérieur du support (40) de la monture (38) portant l'élément chauffant (22).

19. Machine à souder à élément chauffant selon l'une des revendications 17 et 18, **caractérisée par le fait que** dans la surface transversale côté chargement (106) de la protection anti-intervention (100) qui relie les surfaces d'ailes (108) sont prévus des guidages d'entrée espacés l'un de l'autre dans la direction de la hauteur pour des plaques écrans pouvant être entrées respectivement au-dessus de la surface chauffante dirigée vers le haut et sous la plaque chauffante dirigée vers le bas de l'élément chauffant (20).

20. Machine à souder à élément chauffant selon l'une des revendications 17 à 19, **caractérisée par le fait que** la protection anti-intervention (100) présente une enveloppe fabriquée à partir d'un flan allongé initialement à surface plane (100') en tôle ou plaque métallique de faible épaisseur par rabattement sensiblement à angle droit des surfaces d'ailes latérales (108) de la surface d'âme centrale (106) autour d'une arête de pliage perpendiculaire aux bords longitudinaux du flan.

21. Machine à souder à élément chauffant selon la revendication 20, **caractérisée par le fait que** l'enveloppe de la protection anti-intervention (100) est fabriquée à partir d'un flan (100') pourvu d'un grand nombre d'ouvertures de passage (110) réparties régulièrement ou irrégulièrement faites dans la tôle ou la plaque.

22. Machine à souder à élément chauffant selon l'une des revendications 19 à 21, **caractérisée par le fait que** les guidages d'entrée sont formés de surfaces d'ailes horizontales de profilés métalliques (112, 114) qui s'étendent de la surface d'âme (106) de l'enveloppe de la protection anti-intervention (100) jusqu'à l'extrémité arrière de la monture de l'élément chauffant (22).

23. Machine à souder à élément chauffant selon la revendication 22, **caractérisée par le fait que** les extrémités côté surface d'âme des profilés métalliques (112 ; 114) qui forment le ou les guidages d'entrée sont accessibles chacune par une ouverture du genre fente (110) prévue dans la surface d'âme (106) de la protection anti-intervention (100) pour l'introduction d'une plaque écran.

24. Procédé de changement rapide des outils et de l'élément chauffant de machines à souder à élément chauffant selon l'une des revendications 1 à 23, **caractérisé par le fait qu'**on met les outils à changer et l'élément chauffant dans une position partiellement ouverte alignée dans la direction verticale dans leurs positions de travail et les réunit dans cette position alignée par des moyens qui les fixent de manière relativement stable les uns par rapport aux autres en un sandwich d'outils manipulable d'un seul bloc, qu'ensuite on déverrouille les dispositifs de verrouillage et détache le sandwich d'outils des parties de machine sur lesquelles il est monté, qu'après cela, on amène le sandwich d'outils détaché, sur la plate-forme de travail, dans une position de transfert à un dispositif récepteur de sandwich pouvant être placé à cet endroit et éloigné de celle-ci et le pose sur le dispositif récepteur de sandwich, qu'ensuite on éloigne de la position de transfert conjointement avec le sandwich d'outils, et qu'ensuite, on met en position de transfert un dispositif récepteur de sandwich garni d'un nouveau sandwich d'outils et amène le nouveau sandwich d'outils sur la plate-forme de travail du bâti de la machine et le met en position de verrouillage aux dispositifs de verrouillage associés de la machine et le verrouille et accouple ou désaccouple des raccords prévus sur les parties de montage de la machine et les parties du sandwich d'outils pour des conduites sous pression ou en dépression pour des gaz ou des liquides et des lignes électriques d'alimentation en courant de l'élément chauffant.

25. Procédé selon la revendication 24, **caractérisé par le fait qu'**on préchauffe déjà dans le dispositif récepteur de sandwich, avant la réadaptation de la machine, le sandwich d'outils posé sur ce dispositif destiné à remplacer un sandwich d'outils à enlever de la machine.

26. Procédé de changement rapide des outils et de l'élément chauffant de machines à souder à élément chauffant selon l'une des revendications 24 et 25, **caractérisé par le fait qu'**on déplace le chariot support portant l'élément chauffant, avec les outils en position ouverte, de la position de travail à une position à l'intérieur du bâti de la machine dans laquelle l'élément chauffant est décalé horizontalement des outils, qu'ensuite, après avoir défait les raccords aux conduites et lignes d'alimentation, on fait monter l'élément chauffant dans le bâti de la machine dans une position située au-dessus de la trajectoire du chariot support et le fixe dans cette position dans le bâti de la machine et le raccorde à des raccords prévus à cet endroit, au moins à la ligne de raccordement d'énergie de chauffage, qu'ensuite on recule le chariot support, sans élément chauffant, en position de travail et y met à cet endroit les outils préalablement réunis en un sandwich et détachés des parties de la machine qui les portaient et l'amène, sur la plate-forme de travail, dans une position de transfert à un dispositif récepteur de sandwich pouvant être placé à cet endroit et éloigné de celle-ci et le pose sur ce dispositif récepteur de sandwich, qu'ensuite on éloigne de la position de transfert conjointement avec le sandwich d'outils, et qu'ensuite, on met en position de transfert un dispositif récepteur de sandwich garni d'un nouveau sandwich d'outils et glisse le nouveau sandwich d'outils sur la plate-forme de travail du bâti de la machine et le met en position de verrouillage aux dispositifs de verrouillage associés de la machine et le verrouille, qu'ensuite on amène le chariot support, sur le bâti de la machine, dans une position de transfert pour un élément chauffant associé aux outils du nouveau sandwich d'outils et le verrouille à cet endroit à l'élément chauffant associé en le raccordant aux conduites et lignes d'alimentation, après quoi on recule l'élément chauffant en position de travail entre les outils ouverts.

27. Procédé selon la revendication 26, **caractérisé par le fait qu'**on descend le nouvel élément chauffant associé, d'une position d'attente levée décalée de l'élément chauffant dans la position de travail des outils et du premier élément chauffant dans le bâti de la machine, sur le chariot support amené dans cette position d'attente au-dessous de l'élément chauffant associé, et l'accouple audit chariot.
